(19) Europäisches Patentamt / European Patent Office / Office européen des brevets

(11) **EP 4 722 100 A1**

(12) **EUROPEAN PATENT APPLICATION**
published in accordance with Art. 153(4) EPC

(43) Date of publication:
**08.04.2026 Bulletin 2026/15**

(21) Application number: **24810764.1**

(22) Date of filing: **15.04.2024**

(51) International Patent Classification (IPC):
**B63H 9/04** (2020.01)      **B63H 9/02** (2006.01)

(52) Cooperative Patent Classification (CPC):
**B63H 9/02; B63H 9/04;** Y02T 70/5236

(86) International application number:
**PCT/JP2024/014969**

(87) International publication number:
**WO 2024/241756 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.05.2023 JP 2023085652**

(71) Applicant: **Nabtesco Corporation
Tokyo 102-0093 (JP)**

(72) Inventor: **HASHIMOTO Hiroaki
Tokyo 102-0093 (JP)**

(74) Representative: **Grünecker Patent- und
Rechtsanwälte
PartG mbB
Leopoldstraße 4
80802 München (DE)**

(54) **WINDMILL SAIL SYSTEM AND SHIP INTEGRATED PROPULSION SYSTEM**

(57)   A rotor sail system includes: a vertical support post extending in a vertical direction from a hull; a blade connected to a shaft, the blade being rotatable about the shaft, the shaft extending in a predetermined direction with reference to the vertical support post; a detection unit detecting a wind direction and a wind speed in a navigation area of a ship; a receiving unit receiving a thrust command to specify a thrust of the ship; and a rotation control unit capable of controlling a rotational speed of the blade about the shaft. The rotation control unit controls the rotational speed of the blade about the shaft based on the received thrust command and a detection result of the wind direction and the wind speed detected when the thrust command is received.

Fig. 2

EP 4 722 100 A1

**Description**

TECHNICAL FIELD

The present invention relates to a rotor sail system and a ship integrated propulsion system. Priority is claimed on Japanese Patent Application No. 2023-085652, filed May 24, 2023, the content of which is incorporated herein by reference.

BACKGROUND ART

Patent document 1 discloses a wind powered sailing ship equipped with vertical blades, which are rotatable around a vertical shaft and configured in the form of a windmill, and a propeller connected to the vertical shaft. A trailing edge of the vertical blade is connected to a wire extending from an axis that is disposed eccentrically to the rotational axis of a leading edge of the vertical blade in a downwind direction. The vertical blades are each configured to pivot freely around the rotational axis of its leading edge.

Citation List

Patent Document

Patent Document 1: Japanese Unexamined Patent Application No. Hei 6-199287

SUMMARY OF INVENTION

Technical Problem

The above sailing ship has a drawback in that propulsive force cannot be adjusted.
The present invention was made in view of the above drawback, and an object of the invention is to provide a rotor sail system and a ship integrated propulsion system that can adjust the propulsive force.

Solution to Problem

To overcome the above drawback, embodiments of the present inventions are configured as follows.

(1) A rotor sail system according to one aspect of the invention includes: a vertical support post extending in a vertical direction from a hull; a blade connected to a shaft, the blade being rotatable about the shaft, the shaft extending in a predetermined direction with reference to the vertical support post; a detection unit detecting a wind direction and a wind speed in a navigation area of a ship; a receiving unit receiving a thrust command to specify a thrust of the ship; and a rotation control unit capable of controlling a rotational speed of the blade about the shaft, wherein the rotation control unit controls the rotational speed of the blade about the shaft based on the received thrust command and a detection result of the wind direction and the wind speed detected when the thrust command is received.

With this configuration, the rotational speed of the blade about the shaft can be controlled depending on the wind direction and wind speed detected when the thrust command is received, thereby adjusting the thrust in accordance with the thrust command. Thus, the propulsive force can be effectively adjusted.

(2) The rotor sail system (1) may further include a brake unit braking the rotation of the blade about the shaft when the wind speed exceeding a threshold is detected by the detection unit.
(3) The rotor sail system (1) or (2) may further include a steering gear control unit controlling, when the rotational speed of the blade about the shaft is changed by the rotation control unit, a steering gear to steer to a direction opposite to an inertial force generated in a direction opposite to a direction of changing the rotational speed of the blade.
(4) In the rotor sail system (2) or (3), the rotation control unit may include an electric motor capable of rotationally driving the shaft.
(5) The rotor sail system (4) may further include an energy storage unit storing regenerative energy generated by the electric motor when the rotation of the shaft decelerates.
(6) The rotor sail system (4) or (5) may further include an obtaining unit obtaining the wind speed and wind direction of wind currently occurring. When the obtained rotational speed of the blade rotated only by the wind currently occurring is below a threshold, the rotation control unit increases the rotational speed of the blade about the shaft using the electric motor.

(7) In the rotor sail system (6), the threshold may be calculated based on the thrust command.

(8) In the rotor sail system any one of (1) to (7), the shaft is a vertical shaft extending in the vertical direction. The rotor sail system further includes a support member extending away from the vertical shaft and being connected rotatably about the vertical shaft. The blade is a vertical blade that extends vertically, has a leading edge portion supported by the support member, and is rotatable about the vertical shaft, and The rotation control unit may be capable of controlling the rotation speed of the vertical blade rotating about the vertical shaft.

(9) In the rotor sail system (8), the vertical blade is provided in two or more, and the two or more vertical blades may be provided at equal intervals in a circumferential direction around the vertical shaft.

(10) The rotor sail system (8) or (9) may further include an adjustment unit that allows adjustment of an angle of attack of the vertical blade. The adjustment unit may adjust the angle of attack so that a trailing edge portion of the vertical blade moves along an eccentric circular track centered on a position offset toward rear with reference to the vertical support post in a propulsion direction, which is a direction in which the hull is to be navigated.

(11) In the rotor sail system (10), the adjustment unit may be connected to the vertical shaft and have a guide rail along the eccentric circular track, and the vertical blade may have a protrusion that fits into the guide rail at the trailing edge portions of the vertical blade.

(12) In the rotor sail system (10) or (11), the leading edge portion of the vertical blade is connected to the support member rotatably about a rotation shaft extending in the vertical direction. The adjustment unit may include: an electric motor capable of adjusting the angle of attack by driving the rotation shaft; and a drive control unit controlling the electric motor so that the trailing edge portion of the vertical blade moves on the eccentric circular track.

(13) In the rotor sail system (11), the vertical blade is provided with a projection that is insertable into and retractable from the guide rail, and the adjustment unit may move, when the vertical blade is reverse-rotated about the vertical shaft under control of the rotation control unit, the protrusion into and out of the guide rail so that, the leading edge of the vertical blade faces opposite to its orientation during forward rotation of the vertical blade along the eccentric circular track.

(14) In the rotor sail system any one of (1) to (13), the shaft is a vertical shaft extending in the vertical direction, and the vertical support post may be rotatable about the vertical shaft and its rotational direction is reversed depending on the wind direction.

(15) In the rotor sail system (14), the shaft is a vertical shaft extending in the vertical direction. The vertical support post may include a cylindrical portion having a cylindrical shape along the vertical direction, the cylindrical portion is rotatable about the vertical shaft and exposed to outside.

(16) In the rotor sail system (14), the blade is a vertical blade that extends in the vertical direction, has a leading edge portion supported, and is rotatable about the vertical shaft, and the vertical blade may have a symmetrical shape in a front-to-rear direction.

(17) The rotor sail system (15) may further include a tubular fixed post fixed to the hull, the fixed post extending in the vertical direction and covering the cylindrical portion.

(18) A ship integrated propulsion system includes a rotor sail including: a vertical support post extending in a vertical direction from a hull; a blade connected to a shaft, the blade being rotatable about the shaft, the shaft extending in a predetermined direction with reference to the vertical support post; a detection unit detecting a wind direction and a wind speed in a navigation area of a ship; a receiving unit receiving a thrust command to specify a thrust of the ship; and a rotation control unit capable of controlling a rotational speed of the blade about the shaft, the rotation control unit controlling the rotational speed of the blade about the shaft based on the received thrust command and a detection result of the wind direction and the wind speed detected when the thrust command is received. The system further includes a remote control device including: an operation unit being operated to control a propulsion speed of the ship; and a determining unit determining a target thrust of the rotor sail and a target thrust of a propeller driven by a prime mover attached to the ship in accordance with an operation position of the operation unit. The system further includes a rotor sail control device controlling the rotational speed of the blade rotating about the shaft according to the target thrust of the rotor sail; and a prime mover control device controlling a rotational speed of the prime mover according to the target thrust of the propeller.

Advantageous Effects of Invention

According to the aspects of the present invention, it is possible to adjust the propulsive force.

BRIEF DESCRIPTION OF DRAWINGS

[Fig. 1] A perspective view illustrating a rotor sail system of a first embodiment.

[Fig. 2] A diagram illustrating a functional configuration of a ship integrated propulsion system of the first embodiment.

[Fig. 3] A perspective view of the rotor sail of the first embodiment as viewed from the top.

[Fig. 4] A perspective view of the rotor sail of the first embodiment as viewed from the bottom.

[Fig. 5] A diagram illustrating an example of a relationship between a relative wind speed and a lift generated by vertical blades.

[Fig. 6] A diagram illustrating another example of the relationship between the relative wind speed and the lift generated by the vertical blades.

[Fig. 7] A diagram illustrating yet another example of the relationship between the relative wind speed and the lift generated by the vertical blades.

[Fig. 8] A diagram illustrating an angle of attack of the vertical blades.

[Fig. 9] A diagram illustrating an example of a relationship between the angle of attack and a lift-to-drag ratio.

[Fig. 10] A diagram illustrating a relative speed generated by the vertical blades.

[Fig. 11] A diagram illustrating a lift and the like generated by the vertical blades.

[Fig. 12] A diagram illustrating an example of rotation control of the vertical blades of the first embodiment.

[Fig. 13] A diagram illustrating an example of a relationship between rotor sail control and prime mover control in the first embodiment.

[Fig. 14] A diagram illustrating an example of steering gear control in the first embodiment.

[Fig. 15] A diagram illustrating a pressure distribution when six vertical blades are not eccentric.

[Fig. 16] A diagram illustrating Magnus effect.

[Fig. 17] A diagram illustrating a forward component of the lift of the blades.

[Fig. 18] A diagram illustrating a forward component of the Magnus force.

[Fig. 19] A diagram illustrating a propulsive force of a ship.

[Fig. 20] A diagram illustrating an example of a relationship between a wind speed, number of rotations, and forward propulsive force.

[Fig. 21] A diagram illustrating a propulsion direction, wind direction, lateral force direction, and phase.

[Fig. 22] A diagram illustrating an example of a relationship between the phase and the propulsive force by a single vertical blade of the embodiment.

[Fig. 23] A diagram illustrating an example of the relationship between the phase and the propulsive force by six vertical blades of the embodiment.

[Fig. 24] A diagram illustrating an example of the relationship between phase and propulsive force using a single vertical blade of a comparative example.

[Fig. 25] A diagram illustrating an example of the relationship between phase and propulsive force using six vertical blades of the comparative example.

[Fig. 26] A diagram illustrating a perspective view of an upper part of the rotor sail of a second embodiment.

[Fig. 27] A diagram illustrating a perspective view of a lower part of the rotor sail of the second embodiment.

[Fig. 28] A diagram illustrating an example of a relationship between eccentricity and thrust.

[Fig. 29] A diagram illustrating a perspective view of a rotor sail of a third embodiment.

[Fig. 30] A diagram illustrating an example of turning control of the vertical blades of the third embodiment.

[Fig. 31] A diagram illustrating an example of a relationship between thrust contribution and rotation contribution.

[Fig. 32] A perspective view illustrating a rotor sail system of a fourth embodiment.

[Fig. 33] A diagram illustrating an example of forward rotation of the vertical blades of the fifth embodiment.

[Fig. 34] A diagram illustrating an example of reverse rotation of the vertical blades of the fifth embodiment.

[Fig. 35] A diagram illustrating the shape of the vertical blades of the fifth embodiment.

[Fig. 36] A diagram illustrating a perspective view of a rotor sail of a six embodiment.

[Fig. 37] A perspective view illustrating a rotor sail system of a seven embodiment.

[Fig. 38] A perspective view illustrating a nacelle and blade of the seventh embodiment.

[Fig. 39] A diagram illustrating a relationship between a wind direction, thrust, and propulsive force.

[Fig. 40] A diagram illustrating an example of a relationship between a target thrust and sail mode.

[Fig. 41] A perspective view illustrating a rotor sail system of an eighth embodiment.

[Fig. 42] A diagram illustrating a perspective view of a rotor sail of the eighth embodiment.

[Fig. 43] A diagram illustrating a relationship between a lift forth of the blade, blade rotational force, and wind direction component force.

[Fig. 44] A diagram illustrating an example of flow of energy and the like in the rotor sail system, along with a comparative example.

DESCRIPTION OF EMBODIMENTS

Embodiments of a rotor sail system and ship integrated propulsion system according to the present invention will now be described with reference to the accompanying drawings. In the following description, terms such as "parallel," "orthogonal," "center" and "coaxial" describe relative or absolute positions. These terms are not only strictly used but also allow some tolerances and relative differences in angle and distance as long as the same effects can still be produced. In the drawings used for the following description, the respective members are shown to different scales into recognizable sizes.

<Rotor sail System>

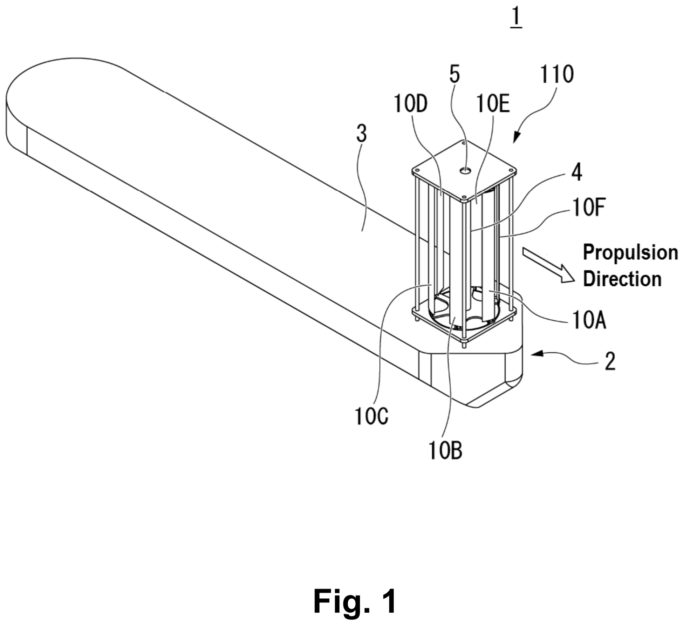

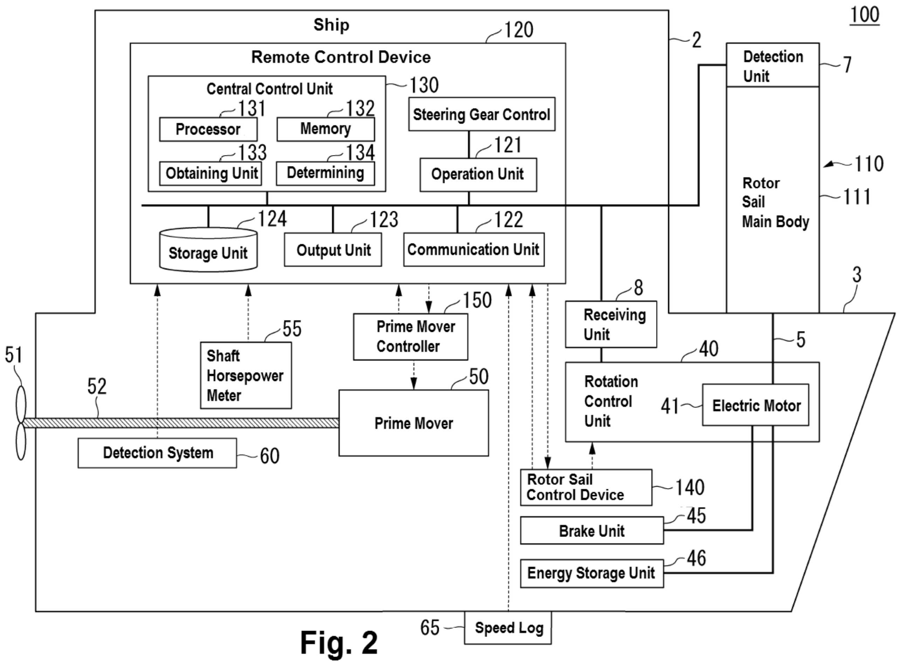

Fig. 1 is a perspective view illustrating a rotor sail system 1 of a first embodiment. Fig. 2 illustrates a functional configuration of a ship integrated propulsion system 100 of the first embodiment.

Referring to Figs. 1 and 2, the rotor sail system 1 includes: a vertical support post 4 extending vertically from a hull 3; blades 10A to 10F connected to a shaft 5 rotatably about the shaft 5 that extends in a predetermined direction with reference to the vertical support post 4; a detection unit 7 detecting a wind direction and wind speed in a navigation area of the ship 2; a receiving unit 8 receiving thrust commands to control thrust of the ship 2; and a rotation control unit 40 capable of controlling a rotational speed of the blades 10A to 10F about the shaft 5. The rotation control unit 40 controls the rotational speed of the blades 10A to 10F about the shaft 5 based on the received thrust commands and detection results of the wind direction and wind speed detected when the thrust commands are received. The rotor sail 110 included in the wind sail system 1 is a sail that propels the ship 2 by generating a lift when it catches the wind.

<Ship Integrated Propulsion System>

The ship integrated propulsion system 100 includes: a rotor sail 110 equipped with the aforementioned vertical support post 4, blades 10A to 10F, detection unit 7, receiving unit 8, and rotation control unit 40; a remote control device 120 equipped with an operation unit 121 that is operated to control a propulsion speed of the ship 2, a determining unit 134 that determines a target thrust of the rotor sail 110 and a target thrust of the propeller 51 driven by a prime mover 50 attached to the ship 2 in accordance with an operation position of the operation unit 121; a rotor sail control device 140 that controls the rotational speed of the blades 10A to 10F rotating about the shaft 5 according to the target thrust of the rotor sail 110; and a prime mover control device 150 that controls a rotational speed of the prime mover 50 according to the target thrust of the propeller 51. The ship integrated propulsion system 100 performs integrated control of two types of propulsion: propulsion by the rotor sail 110 and propulsion by the propeller 51 driven by the prime mover 50.

The ship 2 is equipped with the remote control device 120, the prime mover 50, a shaft 52, the propeller 51, a shaft horsepower meter 55, a detection system 60, a speed log 65, and the prime mover control device 150. Note that the ship 2 does not necessarily have to be a ship operated by crew members. For example, the ship 2 may be a ship capable of autonomous navigation.

The remote control device 120 executes a program (hereinafter referred to as a "ship control program") that controls the operation of the ship 2. The remote control device 120 functions, by executing a ship control program, as a device that includes a central control unit 130, the operation unit 121, a communication unit 122, an output unit 123, and a storage unit 124. The remote control device 120 includes a central control unit 130 that controls operations of each functional unit of the remote control device 120.

The central control unit 130 includes, for example, a memory 132 and a processor 131 such as a CPU (Central Processing Unit) that are connected to each other via a bus. The processor 131 reads a ship control program stored in the storage unit 124 and stores the read ship control program in the memory 132. The processor 131 executes the ship control program stored in the memory 132.

The central control unit 130 communicates with the prime mover control device 150 by controlling the operation of the communication unit 122, for example. The central control unit 130 obtains information input via the operation unit 121, for example. The central control unit 130 records information generated by the execution of the ship control program in the storage unit 124, for example. The central control unit 130 obtains, for example, the number of rotations of the prime mover 50. The central control unit 130 outputs, for example, the obtained number of rotations to the prime mover control device 150. An actual value of the number of rotations of the prime mover 50 obtained (determined) by the central control unit 130 is also referred to as an "actual number of rotations."

The operation unit 121 is a steering handle used to control both the speed and traveling direction of the ship 2. The operation unit 121 accepts input from a crew. The crew inputs either one or both of a target number of rotations or a rotational direction of an engine into the remote control device 120 by operating control unit 121. the target number of rotations is a target number of rotations of the prime mover 50. The rotational direction of the engine is the rotational direction of the prime mover 50. The rotational direction of the prime mover 50 is either forward or reverse. The traveling direction of the ship 2 when the rotational direction of the prime mover 50 is forward is opposite to the traveling direction of the ship 2 when the rotational direction of the prime mover 50 is reverse.

The operation unit 121 outputs the target number of rotations indicated by the result of the crew's operation into the central control unit 130. The operation unit 121 outputs information indicating the engine rotational direction indicated in the result of the crew's operation (hereinafter referred to as "rotational direction information") to the central control unit 130. Note that the operation unit 121 does not necessarily need to be operated by crews. For example, when the ship 2 operates autonomously, the operation unit 121 may be operated by the central control unit 130 in accordance with a ship control program.

The communication unit 122 includes a communication interface for connecting the remote control device 120 to the shaft horsepower meter 55, the detection system 60, the speed log 65, and the prime mover control device 150. The communication unit 122 communicates with the shaft horsepower meter 55, the detection system 60, the speed log 65, and the prime mover control device 150 via either wired or wireless communication. The communication unit 122 transmits information about, for example, the target number of rotations, the actual number of revolutions, and the rotational direction to the prime mover control unit 150.

The output unit 123 includes output devices such as display devices including CRT (Cathode Ray Tube) displays, liquid crystal displays, and organic EL (ElectroLuminescence) displays, as well as audio output devices such as speakers. The output unit 123 may be configured as an interface for connecting these output devices to the device in which the output unit is included. The output unit 123 outputs information related to the remote control device 120. The output unit 123 outputs, for example, results of operations performed via the operation unit 121.

The storage unit 124 is configured using storage devices such as magnetic hard disk devices and semiconductor storage devices. The storage unit 124 stores various information related to the remote control device 120. The storage unit 124 stores, for example, a ship control program in advance. The storage unit 124 stores information generated by execution of the ship control program, for example. The storage unit 124 stores, for example, a history of operations performed by crew members through the operation unit 121. The storage unit 124 stores, for example, a history of the actual number of rotations of the prime mover 50.

The prime mover 50 is an engine that generates propulsive force for the ship 2. The prime mover 50 converts the energy contained in fuel into motive power. Any type of fuel and the operating mechanism can be used provided that the prime mover 50 is able to convert the energy contained in fuel into the motive power. The prime mover 50 is, for example, a two-stroke diesel engine. Alternatively, the prime mover 50 may be, for example, a four-stroke diesel engine or a gas engine. For the sake of explanatory convenience, an example of the ship 2 in which the prime mover 50 is a two-stroke engine will be described.

The shaft 52 is rotated by the power produced by the prime mover 50. The number of rotations of shaft 52 is proportional to the number of revolutions of the prime mover 50. By rotating, the shaft 52 transmits the power produced by the prime mover 50 to the propeller 51.

The propeller 51 is rotated by the power generated by the prime mover 50. The rotation of the propeller 51 produces propulsive force that moves the ship 2.

The shaft horsepower meter 55 measures the power produced by the prime mover 50. The shaft horsepower meter 55 measures the power produced by the prime mover 50 by, for example, detecting a torsional strain produced in the shaft 52 by either an electrical method, an optical method, or both.

The detection system 60 includes a sensor that detects the number of rotations of the prime mover 50. The detection system may include, for example, a proximity sensor. The proximity sensor may be configured to output an on-signal when metal is situated within a certain distance and an off-signal when the metal is not situated within the certain distance. In this case, the proximity sensor outputs an on signal when, for example, a convex portion provided on the surface of the shaft 52 is situated within a detection range and an off signal when a concave portion provided in the surface of the shaft 52 is situated within the detection range. The detection system 60 may detect the number of rotations of the prime mover 50 based on such changes in the output of the proximity sensor and the information obtained in advance indicating the interval between the concave portion and convex portion of the shaft 52.

The detection system 60 may be configured to include other types of devices, not limited to the proximity sensors. For example, the detection system 60 may include an encoder, a sensor that detects engine sound, or a sensor that detects engine vibration.

The speed log 65 measures the speed of the ship 2. The speed log 65 measures the ship's speed using, for example, the Doppler effect. The ship speed measured by the speed log 65 is specifically the ship's speed relative to the water.

The prime mover controller 150 controls the operation of the prime mover 50. The prime mover controller 150 determines the injection amount of the fuel and the timing of the fuel injection based on the actual number of rotations obtained by the determining unit 134. The prime mover controller 150 controls the operation of the prime mover 50 so that the determined injection amount of the fuel is injected at the determined timing. The prime mover controller 150 controls the operation of the prime mover 50 by executing a fuel supply amount calculation process, fuel supply control process, and rotational direction control process.

In the fuel feed calculation process, the amount of fuel to be fed to the prime mover 50 (hereinafter also referred to as "fuel feed") is calculated based on the target rotational speed and the actual rotational speed, using a predetermined fuel feed calculation function. The fuel feed calculation function is a function that uses the target number of rotations and the actual number of rotations as explanatory variables, and the fuel feed as an objective variable. The prime mover control device 150 calculates the fuel feed by executing the fuel feed calculation process.

In the fuel feed control process, the degree of opening and closing of a valve(s) of a fuel feed pipe(s) is controlled so that the fuel feed calculated by the fuel feed calculation process is fed into the prime mover 50. The fuel feed pipe is a pipe connecting the prime mover 50 and an unshown fuel tank, through which the fuel flows from the fuel tank to the prime mover 50. The prime mover control device 150 feeds the fuel from the fuel tank to the prime mover 50 by executing the fuel feed control process.

In the rotational direction control process, the rotational direction of the prime mover 50 is controlled in the direction of the engine rotation. The rotational direction control process is, for example, a process of switching the rotation direction of the prime mover 50 between forward and reverse by operating a clutch of the prime mover 50. The prime mover control device 150 controls the direction of rotation of the prime mover 50 in the engine rotation direction by executing the rotational direction control process.

The direction of a torque output by the prime mover 50 is in accordance with the direction of rotation of the prime mover 50. Therefore, the direction of the torque when the rotational direction of the prime mover 50 is forward is opposite to the direction of the torque when the rotational direction of the prime mover 50 is reverse. The power produced by the prime mover 50 can be obtained by multiplying the magnitude of the torque output by the number of rotations of the prime mover 50.

The central control unit 130 is further provided with an obtaining unit 133 and a determining unit 134.

The obtaining unit 133 obtains the results of detections performed by the detection system 60 via the communication unit 122. The determining unit 134 obtains the power measured by the shaft horsepower meter 55 via the communication unit 122. The obtaining unit 133 obtains the ship speed measured by the speed log 65 via the communication unit 122. The obtaining unit 133 obtains the fuel feed calculated by the prime mover controller 150 via the communication unit 122. The obtaining unit 133 obtains the target number of rotations and the rotational direction information outputted by the operation unit 121 via the communication unit 122.

The determining unit 134 executes a number of rotations determination process. the number of rotations determination process determines one of values of the number of rotations obtained by the detection system 60 as the actual number of rotations of the prime mover 50 based on at least one of the target number of rotations, state information, which is information about the state of the prime mover 50, or the speed of the ship 2. Examples of the possible actual number of rotations include a first number of rotations and a second number of rotations. The state information includes, for example, the fuel feed. The state information includes, for example, the power measured by the shaft horsepower meter 55.

The central control unit 130 outputs the actual number of rotations determined by the determining unit 134 to the prime mover controller 150 via the communication unit 122. The central control unit 130 outputs the rotational direction information to the prime mover controller 150 via the communication unit 122. The central control unit 130 outputs the target number of rotations to the prime mover controller 150 via the communication unit 122. The central control unit 130 controls the operation of the output unit 123 and causes the output unit 123 to output information.

<Rotor sail>

In the illustrated example, a single rotor sail 110 is installed on the front part (bow) of a hull 3. The installation configuration (installation location, number of units, etc.) of the rotor sail 110 is not limited to the above and can be changed depending on the design specifications.

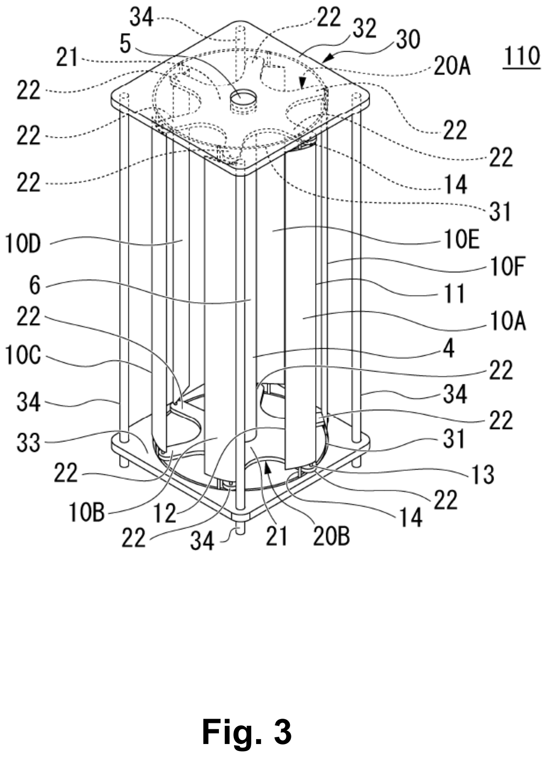

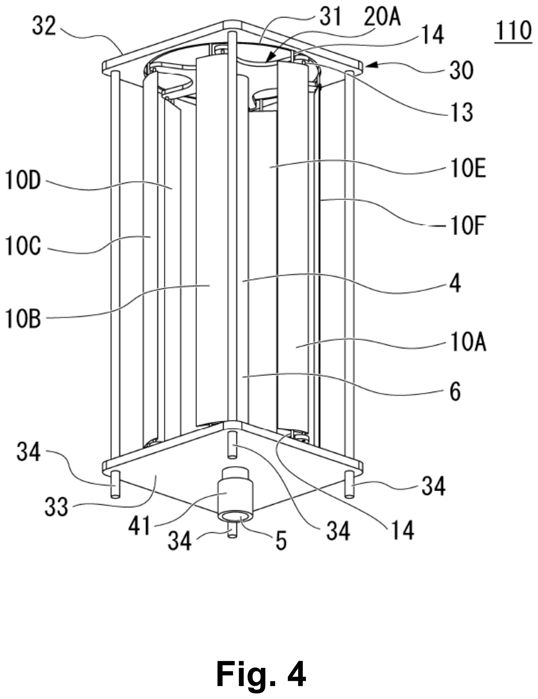

Fig. 3 is a perspective view of the rotor sail 110 of the first embodiment as viewed from the top. Fig. 4 is a perspective view of the rotor sail 110 of the first embodiment as viewed from the bottom.

Referring to Figs. 3 and 4, the axis of the rotor sail 110 of the embodiment is a vertical shaft 5 extending in the vertical direction. The rotor sail 110 further includes support members 20A and 20B extending away from the vertical shaft 5 and being connected rotatably about the vertical shaft 5.

The support members 20A and 20B each include a plate-shaped main body 21 surrounding the vertical shaft 5 as viewed from the vertical direction, and a plurality of protrusions 22 extending radially from the outer periphery of the main body 21. In the illustrated example, six protrusions 22 are provided at equal intervals in the circumferential direction about the vertical shaft 5. Note that the configuration of the protrusions 22 (number and arrangement, etc.) is not limited to the above and can be changed depending on the design specifications.

Blades 10A to 10F are vertical blades extending in the vertical direction. The blades 10A to 10F (hereinafter also referred to as "vertical blades 10A to 10F") are rotatable about the vertical shaft 5. The vertical blades 10A to 10F are supported by the support members 20A and 20B at their leading edge portions 11. The leading edge portions 11 of the vertical blades 10A to 10F correspond to front portions (upstream portions in the rotational direction) of the vertical blades 10A to 10F in the rotational direction about the vertical shaft 5. The rotation control unit 40 is capable of controlling a rotational speed of the vertical blades 10A to 10F about the vertical shaft 5. The leading edge portions 11 of the vertical blades 10A to 10F are each connected rotatably about a rotation shaft 13 extending vertically from a tip of the corresponding protrusion 22.

The vertical blades 10A to 10F are provided in two or more. The two or more vertical blades 10A to 10F are provided at equal intervals in the circumferential direction about the vertical shaft 5. In the illustrated example, six vertical blades 10A to 10F are provided at equal intervals in the circumferential direction about the vertical shaft 5. Note that the configuration of the vertical blades 10A to 10F (number and arrangement, etc.) is not limited to the above and may be changed depending on the design specifications.

The rotor sail 110 further includes an adjustment unit 30 that allows adjustment of the angle of attack of the vertical blades 10A to 10F. The adjustment unit 30 adjusts the angle of attack so that trailing edge portions 12 of the vertical blades 10A to 10F move along an eccentric circular track centered on a position offset toward the rear with reference to the vertical support post 4 in the propulsion direction, which is the direction in which the hull 3 is to be navigated. The trailing edge portions 12 of the vertical blades 10A to 10F correspond to rear portions (downstream portions in the rotational direction) of the vertical blades 10A to 10F in the rotational direction about the vertical shaft 5.

The adjustment unit 30 is connected to the vertical shaft 5 and has a guide rail 31 along the eccentric circular track. The vertical blades 10A to 10F each have a protrusion 14 that fits into the guide rail 31 at the trailing edge portions 12 of the vertical blades 10A to 10F. In the illustrated example, the guide rail 31 is arranged on the eccentric circular track that is circular when viewed from the vertical direction. This simplifies the configuration of the guide rail 31 and reduces sliding resistance.

Furthermore, the shape of the eccentric circular track as viewed from the vertical direction is not limited to the above, but may also be elliptical, oblong, or a closed ring formed by connecting curves. For example, the configuration of the guide rail 31 (such as the shape of the eccentric circular track) can be changed depending on the design specifications.

The adjustment unit 30 includes a top plate 32 having a rectangular shape as viewed from the vertical direction, a rectangular bottom plate 33 disposed vertically below the top plate 32, and a plurality of support posts 34 extending vertically to support the top plate 32 and bottom plate 33. In the illustrated example, four support posts 34 extend vertically to connect the corners of the top plate 32 and those of the bottom plate 33. Note that the configuration of the top plate 32 and bottom plate 33 (shape and arrangement, etc.), as well as the configuration of the support posts 34 (number and arrangement, etc.), are not limited to the above and may be changed depending on design specifications.

In the illustrated example, the guide rail 31 is provided on each of a lower surface of the top plate 32 and an upper surface of the bottom plate 33. The guide rail 31 provided on the lower surface of the top plate 32 receives the protrusions 14 provided at the upper ends of the trailing edge portions 12 of the vertical blades 10A to 10F. The guide rail 31 provided on the upper surface of the bottom plate 33 receives the protrusions 14 provided at the lower ends of the trailing edge portions 12 of the vertical blades 10A to 10F. Note that the manner in which the protrusions 14 engage with the guide rails 31 is not limited to the above and may be modified depending on design specifications. Alternatively, the guide rail 31 may be provided on either the upper side or the lower side (the lower surface of the top plate 32 or the upper surface of the bottom plate 33). For example, the guide rails 31 can be installed in any other manners as required by design specifications.

<Relationship between relative wind speed and lift>

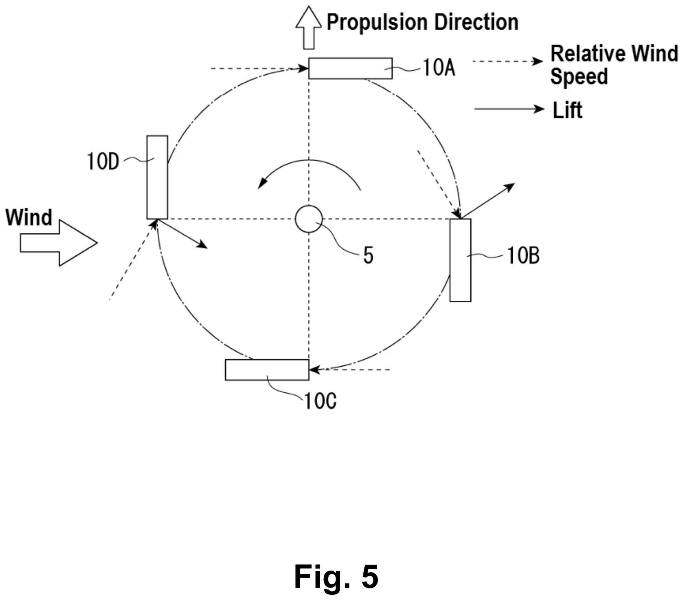

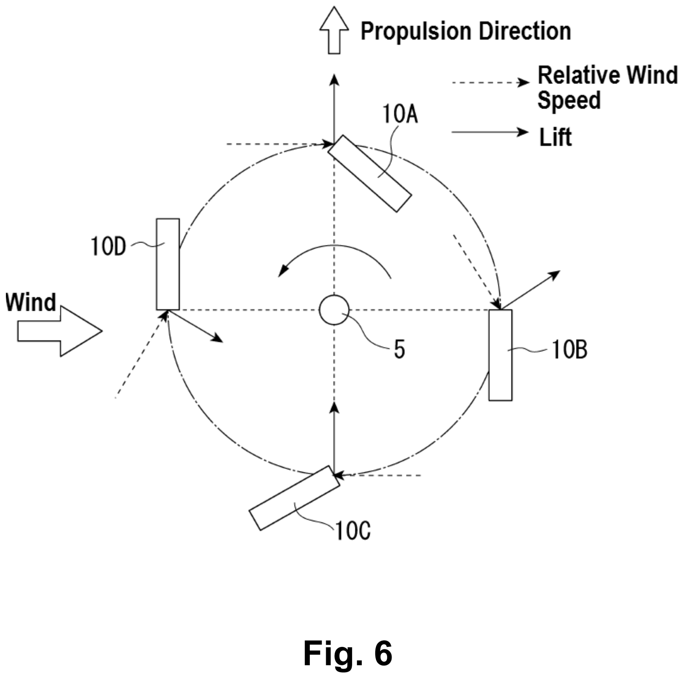

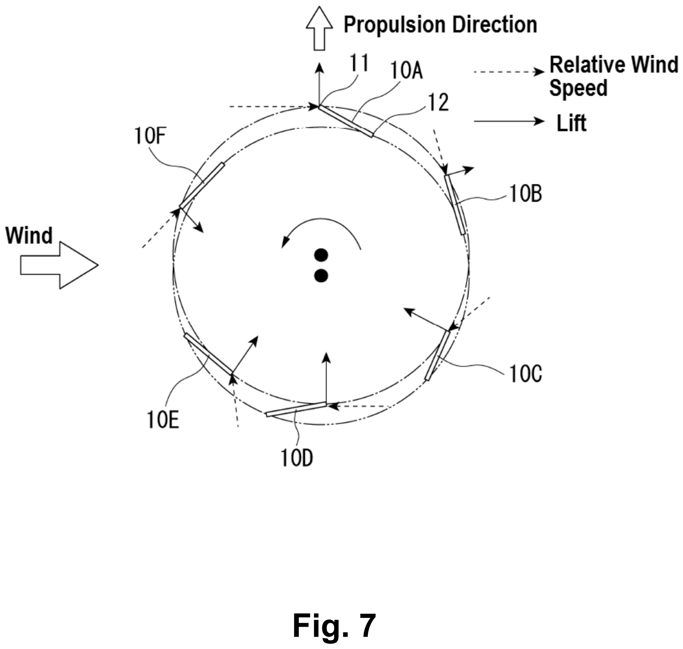

Fig. 5 illustrates an example of a relationship between a relative wind speed and a lift generated by the vertical blades 10A to 10D. Fig. 6 illustrates another example of the relationship between the relative wind speed and lift generated by the vertical blades 10A to 10D. Fig. 7 illustrates yet another example of the relationship between the relative wind speed and lift generated by the vertical blades 10A to 10F.

Fig. 5 shows an example where the angles of attack of the vertical blades 10A to 10D are the same within one cycle. In this case, the lift is generated in the wind direction (from left to right in the figure).

The example of Fig. 6 shows a case where the angles of attack of the vertical blades 10A to 10D varies over a single rotation cycle, such that the vertical blade 10A is tilted at a front position in the propulsion direction, while the vertical blade 10C is raised at a rear position in the propulsion direction. In this case, the lift can be generated forward in the propulsion direction, except for the vertical blade 10D situated at the left position in Fig. 6.

In Fig. 7, a circular track on which the leading edge portions 11 (rotation shafts 13) of the vertical blades 10A to 10F move is shown by the single dotted line, and a circular track (eccentric circular track) on which the trailing edge portions 12 (protrusions 14) of the vertical blades 10A to 10F move is shown by the double dotted line.

The example of Fig. 7 illustrates a case where the angles of attack of the vertical blades 10A to 10F are adjusted by moving the trailing edge portions 12 of the vertical blades 10A to 10F along the eccentric circular track centered on a position shifted rearward from the vertical support post 4 in the propulsion direction. In this case, except for the vertical blade 10F at the upper left position in Fig. 7, the lift can be generated in front of the blades in the propulsion direction.

<Angle of Attack of Vertical Blade>

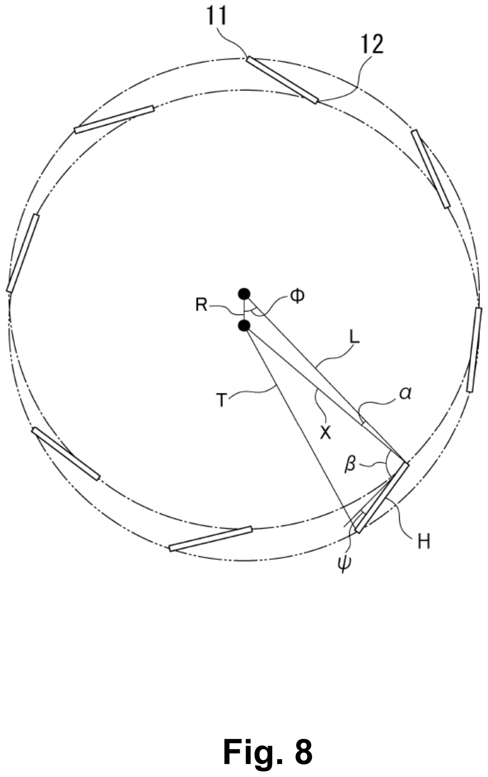

Fig. 8 illustrates the angle of attack of the vertical blade. In Fig. 8, viewed from the vertical direction, the circular track on which the leading edge portion 11 (rotation axis) of the vertical blade moves indicated by the single-dashed line, while the circular track (eccentric circular track) on which the trailing edge portion 12 (protrusion 14) of the vertical blade moves is indicated by the double-dashed line. Further, in Fig. 8: "R" denotes the eccentricity (the distance between the center of the circular track of the leading edge portion 11 and the center of the eccentric circular track of the trailing edge portion 12); "L" denotes the radius of the circular track traced by the leading edge portion 11; "T" denotes the radius of the eccentric circular track traced by the trailing edge portion 12; "H" denotes the length of the vertical blade (the distance between the center of the rotation shaft 13 in the leading edge portion 11 and the center of the protrusion in the trailing edge portion 12); "X" denotes the distance between the center of the eccentric circular track traced by the trailing edge portion 12 and the center of the rotation shaft 13 in the leading edge portion 11; "$\psi$" denotes the angle (hereinafter referred to as "blade angle") formed between the vertical blade and the tangential direction of the circular track traced by the leading edge portion 11; "$\varphi$" denotes the angle formed between segment R and segment L; "$\alpha$" denotes the angle formed between segment L and segment X; and "$\beta$" denotes the angle formed between segment X and segment H. These relationships are expressed by the following equations (1) to (4).

[Equation 1]

$$X^2 = L^2 + R^2 - 2LR\cos\Phi \qquad \cdots (1)$$

$$R^2 = L^2 + X^2 - 2LX\cos\alpha \qquad \cdots (2)$$

$$T^2 = X^2 + H^2 - 2HX\cos\beta \qquad \cdots (3)$$

$$\Psi = \alpha + \beta - 90 \qquad \cdots (4)$$

For example, the eccentricity R should be set so that the angle of attack is optimal at front and rear of the blades in the propulsion direction. For example, in order to achieve an optimal blade angle $\psi$, the track on which the trailing edge portion 12 of the vertical blade slides should be set to an optimal curve.

<Relationship Between Angle of Attack and Lift-to-Drag Ratio>

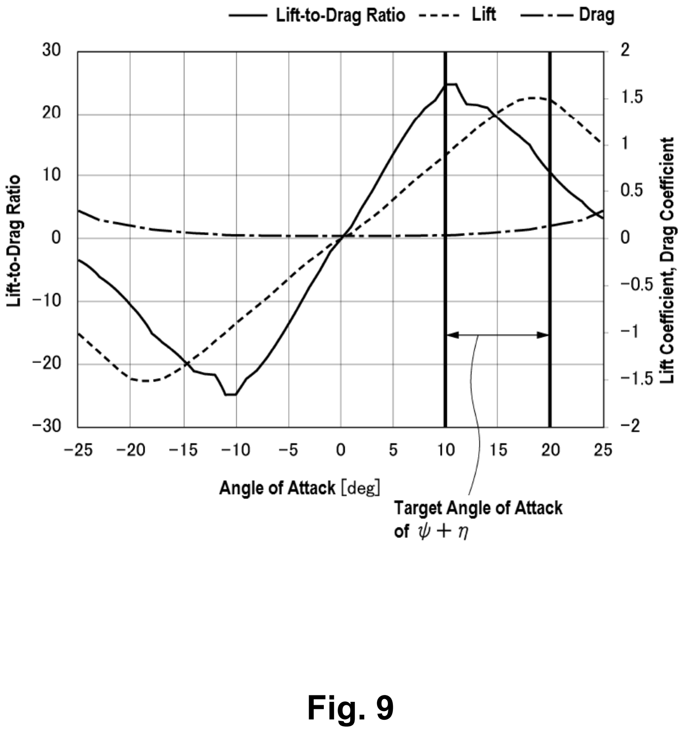

Fig. 9 illustrates one example of the relationship between the angle of attack and a lift-to-drag ratio. The lift-to-drag ratio refers to the ratio of lift to drag (lift/drag). In the graph of Fig. 9, the solid-line indicates the lift-to-drag ratio, the dashed-line indicates the lift, and the single-dashed-dot-line indicates the drag, respectively. Further, in Fig. 9, "$\psi$" denotes the blade angle, and "$\eta$" denotes the relative wind direction angle. The angle of attack is defined by the relationship: angle of attack = blade angle $\psi$ + relative wind direction angle $\eta$.

For example, based on Equations (1) to (4) above, the eccentricity R may be calculated such that the blade angle $\psi$ yields the maximum lift-to-drag ratio at both the front and rear positions in the propulsion direction. In this case, assuming "$\lambda$" is the tip speed ratio, the relative wind direction angle $\eta$ is given by $\eta = \arctan(1/\lambda)$. The angle $\psi + \eta$ may then be set to achieve the optimal angle of attack (target angle of attack).

For example, when the circumferential velocity is sufficiently high relative to the wind speed, or when the wind is almost a crosswind, the wind at the front and rear positions in the propulsion direction blows substantially tangentially to the circumference. Accordingly, the eccentricity R may be set so that the maximum and minimum values of the blade angle $\psi$ correspond to the angles at which the lift-to-drag ratio (or lift) is maximized.

For example, the eccentricity R may be set such that the lift-to-drag ratio at both the front and rear positions is maximized. For example, the diameter of the circular track may be adjusted such that the lift-to-drag ratios at both the front and rear positions are equal. For example, an initial deviation angle may be applied such that the lift-to-drag ratios at both the front and rear positions are equal. Note that the initial deviation angle varies when changing the position of the shaft connecting the blades or modifying the radius of the circular track or the eccentric circular track. For example, to enable thrust in the propulsion direction, a structure that allows adjustment of the eccentricity R may be provided. For example, to achieve the optimal angle of attack, the track on which the trailing-edge portions 12 of the vertical blades slide may be defined as an optimal curve.

<Lift>

The lift is calculated by the following equation (5).
[Equation 2]

$$L = \frac{1}{2} \rho V^2 S C_L \quad \cdots (5)$$

In the above Equation (5), L, $\rho$, V, S, and $C_L$ denote the lift, density, wind speed, blade area, and lift coefficient, respectively.

For example, to maximize the lift L, increasing the blade area S may be considered. However, increasing the blade area S is difficult for the following three reasons:

(1) Widening the blade span depends on the beam of the ship.
(2) Raising the blade height increases the risk of capsizing.
(3) Using multiple blades results in shielding by adjacent blades.

Whereas in the present embodiment, the rotational speed of the vertical blades 10A to 10F about the vertical shaft 5 is controlled by the rotation control unit 40. Accordingly, rather than utilizing the wind speed as it is, a relative speed can be increased by moving the vertical blades 10A to 10F.

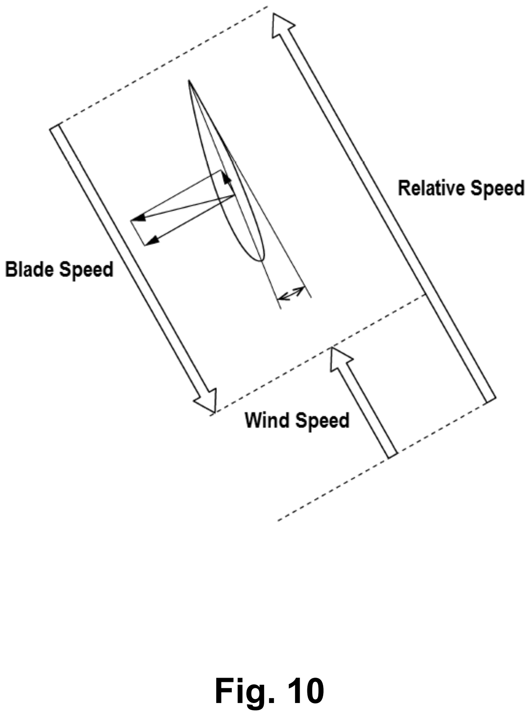

Fig. 10 illustrates the relative speed of the vertical blades.

As shown in Fig. 10, the relative speed is the relative speed between the wind speed and the blade speed. Since the rotor sail rotates by the force of the wind, the circumferential speed also becomes several times the wind speed. In the embodiment, by leveraging the wind speed V of Equation (5) with the rotor sail, the lift L can be increased.

For example, the rotation control unit 40 can control the rotational speed of the vertical blades 10A to 10F about the vertical shaft 5 and adjust the lift by changing the relative speed. In other words, the lift can be controlled by adjusting the rotational speed of the vertical blades 10A to 10F about the vertical the vertical shaft 5.

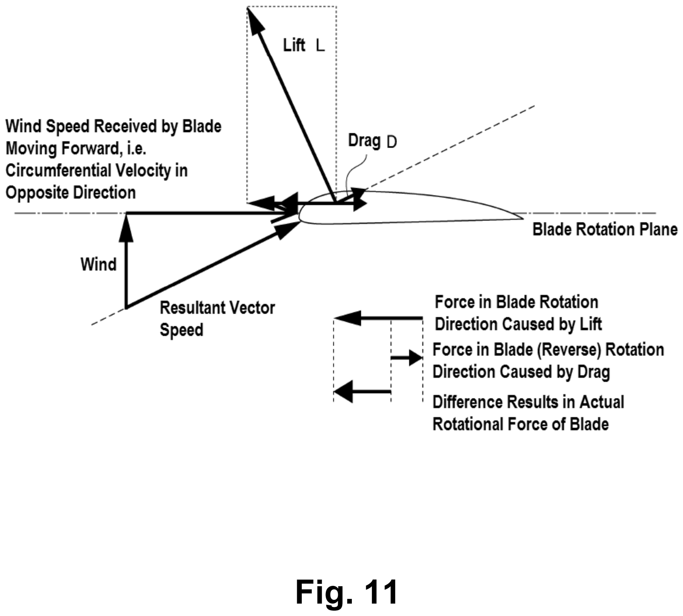

Fig. 11 illustrates the lift and the like generated by the vertical blades.

In the example of Fig. 11, the rotation of the vertical blade (blade) about the vertical shaft causes the blade to move forward along the rotation plane. In this case, the resultant vector velocity is the combination of the wind speed (the circumferential velocity in the opposite direction) acting on the blade as it moves forward and the wind speed itself. The lift L is generated in a direction perpendicular to the resultant vector velocity. The drag D is generated in a direction parallel to the resultant vector velocity. A difference between a force in the blade rotational direction caused by the lift L and a force in the blade rotational direction (opposite rotational direction) caused by the drag D results in the actual rotational force of the blade.

<Electric Motor>

Referring to Figs 2 to 4, the rotation control unit 40 includes an electric motor 41 capable of rotating the vertical shaft 5. The electric motor 41 enables both the rotation of the vertical shaft 5 and the acceleration and deceleration of the rotation of the vertical shaft 5. In other words, the electric motor 41 enables both the rotation of the vertical blades 10A to 10F about the vertical shaft 5 and the acceleration and deceleration of the rotation of the vertical blades 10A to 10F about the vertical shaft 5.

In the illustrated example, the electric motor 41 is attached to the lower end of the vertical shaft 5. In this case, the center of gravity is lowered, which has the advantage of making maintenance easier.

Alternatively, the electric motor 41 may be mounted on the upper, lower, or middle portion of the vertical shaft 5. In this case, there is the advantage that less stress is placed on bearings of the motor.

For example, the electric motor 41 can be mounted in any other manners depending on design specifications.

<Brake Unit>

The rotor sail system 1 further includes a brake unit 45 that brakes the rotation of the vertical blades 10A to 10F about the vertical shaft 5 when the wind speed exceeding a threshold is detected by the detection unit 7. The brake unit 45 reduces the rotational speed of the vertical blades 10A to 10F by braking their rotation about the vertical shaft 5 during strong winds, thereby reducing the lift.

<Energy Storage Unit>

The rotor sail system 1 further includes an energy storage unit 46 that stores regenerative energy generated by the electric motor 41 when the rotation of the vertical shaft 5 decelerates. With this configuration, it is possible to utilize the regenerative energy stored in energy storage unit 46. For example, the energy storage unit 46 may be configured to include a battery, capacitor, etc.

As described above, the rotor sail functions as a sail that converts a wind force into a propulsive force, and also operates as a generator capable of converting excess wind energy into electricity when the wind force exceeds propulsion commands. For example, the generated electricity may be used during propulsion or for general purposes such as lighting.

In the case of the rotor sail having the configuration in which the angle of attack is adjusted so that the trailing edge portions 12 of the vertical blades 10A to 10F move on the eccentric circular track, the power output is maximized when the wind blows from behind in the direction of propulsion. Therefore, in the case of the above configuration it is preferable to moor at locations where the power output is maximized. Note that if the angle of attack can be adjusted to any angle by using the electric motor 41, the ship can moor in any direction. For example, in the case of fixed blades where the angle of attack is not moved, the ship can moor in any direction, and the rotational direction can be any direction.

<Obtaining Unit>

The rotor sail system 1 further includes the obtaining unit 133 that obtains the wind speed and wind direction of the wind currently occurring. When the rotational speed of the vertical blades 10A to 10F about the vertical shaft 5, which rotate only by the wind currently occurring, is below a threshold, the rotation control unit 40 increases the rotational speed of the vertical blades 10A to 10F, using the electric motor 41. For example, when the thrust that can be generated by the rotor sail rotating without energy supply based on the current wind speed and direction is insufficient to meet a thrust command, the thrust can be amplified by accelerating the rotation using the power of the electric motor 41.

For example, the threshold for the rotational speed of the vertical blades 10A to 10F (an example of a threshold for the blade rotational speed) is calculated based on the thrust command. For example, the optimal rotational speed can be calculated from the thrust command, and based on that calculation result, the rotational speed of the vertical blades 10A to 10F can be increased by the electric motor 41.

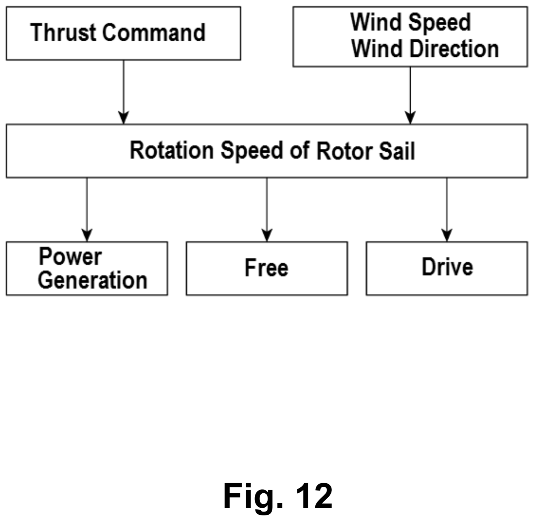

Fig. 12 illustrates an example of the rotation control of the vertical blades of the first embodiment. In Fig. 12, the rotational speed of the rotor sail corresponds to the rotational speed of the vertical blades 10A to 10F about the vertical shaft 5.

Referring to Fig. 12, for example, the rotation control of the vertical blades 10A to 10F can be performed in "free," "power generation," and "drive" modes. For example, depending on the wind speed and wind direction, the electric motor 41 can be braked, driven, set free, or switched to a different mode.

For example, the basic setting is "free." In this case, the rotor sail is rotated by wind power to generate the lift. For example, under normal conditions, the electric motor 41 is set to "free," allowing the rotor sail to rotate freely at maximum speed.

For example, during strong winds (when the detection unit 7 detects a wind speed exceeding the threshold), the rotation control is set to "power generation." For example, the threshold is determined based on the magnitude of the thrust command. For example, during strong winds, the electric motor 41 is set to a power generation brake mode to reduce the number of rotations. For example, during strong winds, the electric motor 41 is set to brake mode to reduce the rotor sail's rotational speed and thereby reducing the thrust.

For example, during weak winds (i.e., the wind speed detected by detection unit 7 falls below a predetermined threshold), the rotation control is set to the "drive" mode. In this case, since wind force alone is insufficient to rotate the rotor sail adequately under the weak wind, the electric motor 41 drives the rotor sail to increase the lift. Specifically, during weak winds, the electric motor 41 is energized to increase the rotational speed of the rotor sail and thereby enhance the thrust.

For example, during startup (i.e., when the blades of the rotor sail are stationary), the rotation control is set in the "drive" mode. Because a lift-type rotor sail does not self-start at rest since its angle of attack is not optimal, the electric motor 41 can be used to initiate the rotation. Specifically, only at the startup does the electric motor 41 forcibly rotate the rotor sail.

For example, when wind direction changes, the rotation control is first set in the "power generate" mode to stop the rotation and then switches to the "drive" mode to reverse-rotate the rotor sail. In this way, effectively utilizes the Magnus effect can be effectively utilized.

<Relationship Between Rotor sail Control And Prime Mover Control>

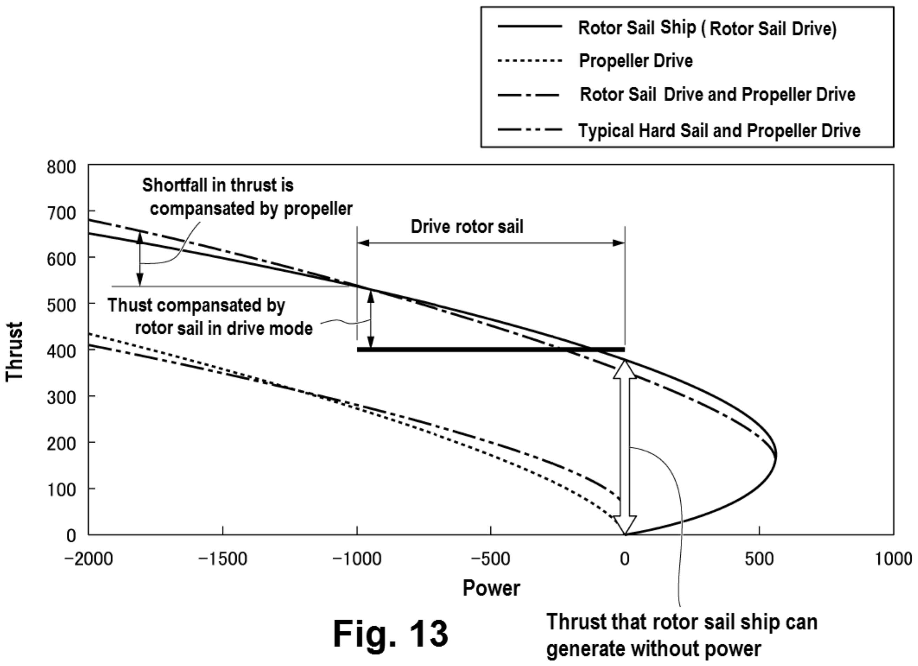

Fig. 13 illustrates an example of a relationship between the rotor sail control and the prime mover control in the first embodiment. Fig. 13 shows the case where the wind condition is between tailwind and crosswind. In the graph of Fig. 13, the solid line represents the case of the rotor sail ship (rotor sail drive), the dashed line represents the case of propeller drive, the single dotted line represents the case of both the rotor sail drive and propeller drive, and the double dotted line represents the case of combining a conventional hard sail with propeller drive. The conventional hard sail corresponds to a sail that converts wind energy into a propulsive force using an extendable hard sail. Note that the conventional hard sail alone cannot be driven by power, so the graph of the conventional hard sail alone (not shown) would become a straight line with a horizontal intercept.

Referring to Fig. 13, the thrust that the rotor sail ship can generate without auxiliary power is limited. Accordingly, any shortfall in the thrust without auxiliary power may be compensated by the drive mode of the rotor sail (the rotational driving of the vertical blades 10A to 10F). For example, any shortfall in the thrust which cannot be generated by the rotor sail drive mode may be supplemented by the propeller 51 (propeller drive).

For example, the control unit 130 calculates the optimal rotational speed of the vertical blades 10A to 10F about the vertical shaft 5 based on the received thrust command and the results of detection of the wind direction and wind speed conducted when the thrust command was received. For example, when controlling the rotational speed of the vertical blades 10A to 10F, vector control can be used to control the q-axis current, enabling seamless control regardless of whether the blades are accelerating or decelerating. For example, the center control unit 130 may link the vertical blades 10A to 10F and the propeller 51 and adjust the thrust ratio between the rotor sail and the propeller 51 to maximize energy efficiency.

As described above, the rotor sail system 1 is a system that converts wind power into a propulsive force. For example, when a propulsive force command value is received from the remote control device 120, the optimal number of rotations of the vertical blades 10A to 10F is calculated based on the wind direction and the wind speed so that the specified propulsive force is generated. Then, the electric motor 41 is controlled so that the calculated number of rotations is achieved. The number of rotations referred to here includes the direction of rotation. In the case of reverse rotation, it is controlled at a negative speed.

For example, when the natural thrust of the rotor sail ship alone is insufficient, the propeller 51 is also driven. Depending on the wind direction, if the rotor sail 110 is more efficient than the propeller 51, the electric motor 41 is driven to increase the number of rotations and thus the propulsive force. Whereas when the propeller 51 is more efficient than the rotor sail 110, the rotor sail 110 is set to free operation mode, and the propeller 51 is driven to generate a propulsive force. Additionally, there may be cases where both the electric motor 41 of the rotor sail 110 and the propeller 51 are driven simultaneously.

For example, multiple rotor sails can be arranged on the hull to adjust the rotational moment of the ship. For example, multiple rotor sails can be arranged at the front and rear of the hull, and the number of rotations can be made different between the front and rear rotor sails. This allows the forces acting on the ship in the lateral direction to be set to different values by the front and rear rotor sails, thereby generating a moment.

<Steering Gear Control Unit>

Referring to Fig. 2, the rotor sail system 1 further includes a steering gear control unit 125. When the rotation control unit 40 changes the rotational speed of the vertical blades 10A to 10F about the vertical shaft 5, a steering gear control unit 125 controls the steering gear to steer to a direction opposite to the inertial force generated in a direction opposite to the direction of changing the rotational speed of the vertical blades 10A to 10F. By anticipating the torque caused by the inertial force would impose on the hull 3, the steering gear control unit 125 cooperates with a rudder to counteract the torque and thus prevent the hull 3 from yawing.

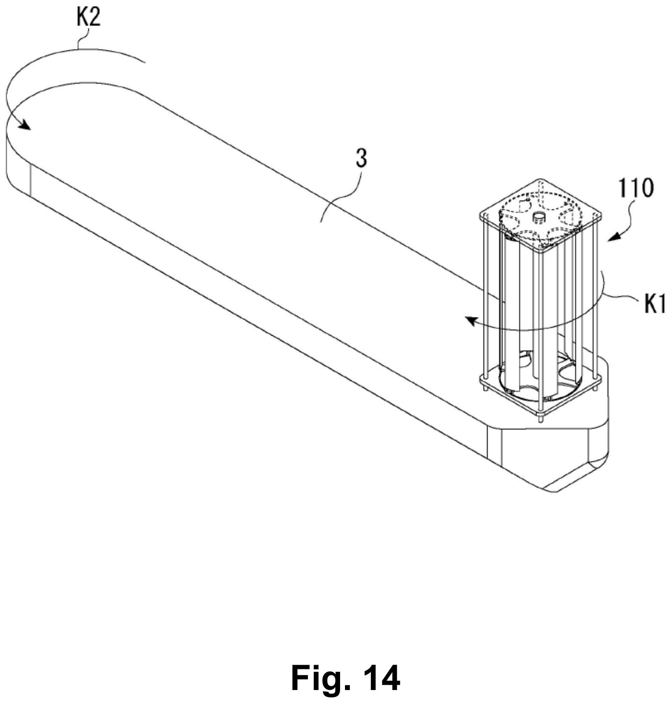

Fig. 14 illustrates an example of steering gear control in the first embodiment.

Referring to Fig. 14, the steering gear may be controlled to steer to the direction (the direction of arrow K2 on the stern side in Fig. 14) opposite to the direction of arrow K1 around the rotor sail 110 in Fig. 14 (the direction of the inertial force generated in the direction opposite to the direction of changing the rotational speed of the vertical blades 10A to 10F).

For example, when changing the rotational speed of the vertical blades 10A to 10F by driving or braking, it may cooperate with the rudder. For example, when the electric motor 41 is in a free state and the vertical blades 10A to 10F are rotating freely, it may not be necessary to cooperate with the rudder. For example, when applying brakes or driving to change the rotational speed of the vertical blades 10A to 10F, torque may act on the hull 3, causing the hull 3 to rotate. To prevent this, when only one rotor sail 110 is installed, it is desirable to cooperate with the rudder to account for the torque acting on the hull 3, thereby preventing the hull 3 from rotating.

<Vertical Support Post>

Referring to Fig. 3, the vertical support post 4 has a cylindrical portion 6. The cylindrical portion 6 is rotatable about the vertical shaft 5, has a cylindrical shape along the vertical direction, and is exposed to the outside. The vertical support post 4 is rotatable about the vertical shaft 5 and may reverse its rotational direction depending on the wind direction. For example, the vertical support post 4 may rotate together with the vertical shaft 5 or independently of the vertical shaft 5. For example, the vertical support post 4 may rotate driven by the electric motor 41 that is attached to the lower end of the vertical shaft 5, or it may rotate driven by another electric motor. For example, how to rotate the vertical support post 4 may be changed depending on design specifications.

For example, the vertical support 4 has a cylindrical portion 6 extending across the entire portion between the top plate 32 and the bottom plate 33. Note that the vertical support post 4 may have the cylindrical portion 6 only in a part of the space between the top plate 32 and the bottom plate 33, without being limited to the above configuration. For example, the configuration of the cylindrical portion 6 in the vertical support post 4 may be changed depending on the design specifications.

For example, the vertical support post 4 is configured such that the entire outer surface of the cylindrical portion 6 (i.e., portions other than the upper and lower ends of the cylindrical portion 6) is exposed to the outside. Note that the vertical support post 4 may be configured such that only a part of the outer surface of the cylindrical portion 6 is exposed to the outside. For example, the manner in which the cylindrical portion 6 is exposed to the outside may be changed depending on design specifications.

<Magnus Effect>

When the cylinder rotates in the wind, the Magnus effect occurs. As described above, by making a part of the rotor sail 110 cylindrical, the Magnus effect can be obtained. For instance, increasing the thickness of the cylindrical portion 6 of the vertical support post 4 enhances the Magnus effect.

Note that since the Magnus effect originates from circulation around the axis, it is not necessarily required to provide the cylinder. For example, when multiple blades rotate, circulation occurs at the outer edges of the blades, resulting in a speed difference in wind velocity between the front and rear of the rotor sail. In this case, a pressure difference is generated due to Bernoulli's principle, and this pressure difference acts as a propulsive force. Therefore, it can be considered as the cylinder including the blades.

For example, if the rotational direction can be switched, the Magnus force generated by the Magnus effect may be directed forward in the propulsion direction by changing the rotational direction depending on the wind direction. Additionally, by increasing the circumferential size of the cylindrical portion 6 or the arrangement of the blades on the vertical support post 4, the Magnus force may act in addition to the power of the rotor sail ship, thereby potentially contributing to an increase in the propulsive force.

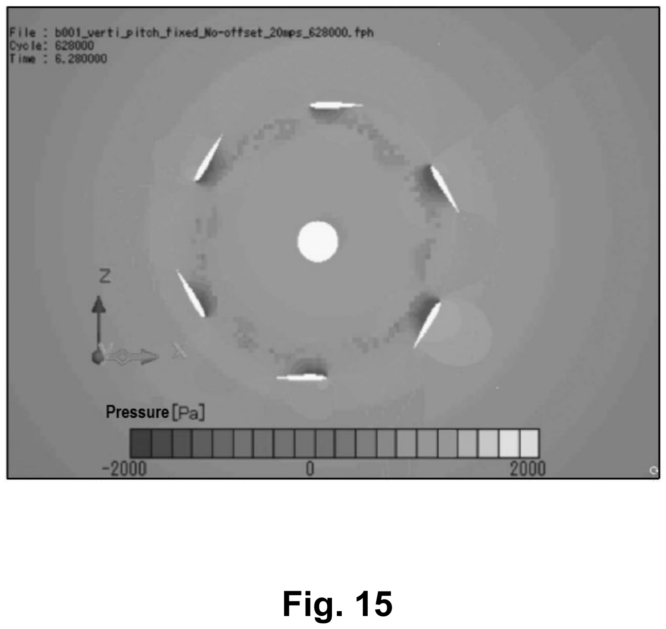

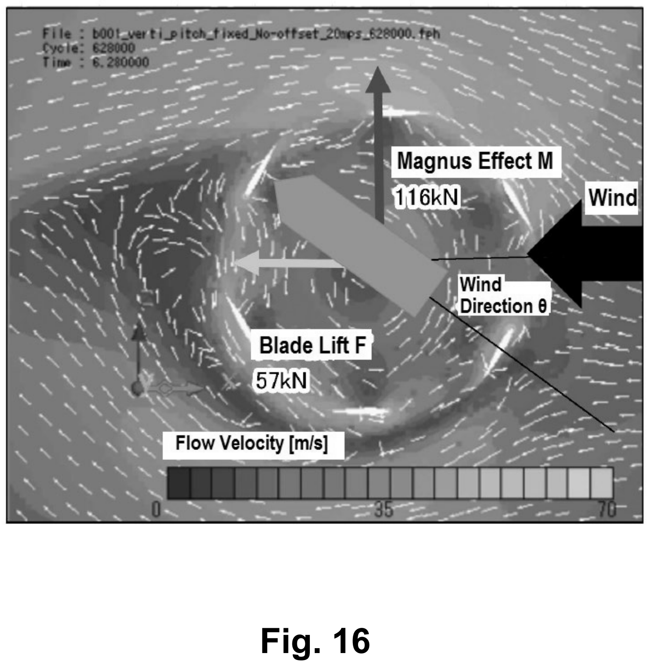

Fig. 15 illustrates a pressure distribution when the six vertical blades are not arranged eccentrically. Fig. 16 illustrates the Magnus effect. In Fig. 16, the wind direction θ, blade lift F, and Magnus effect M are shown by arrows, respectively.

Referring to Figs. 15 and 16 together, when the vertical blades rotate about the vertical shaft, the lift of the blades that depends on the wind direction and the force caused by the Magnus effect (Magnus force) act.

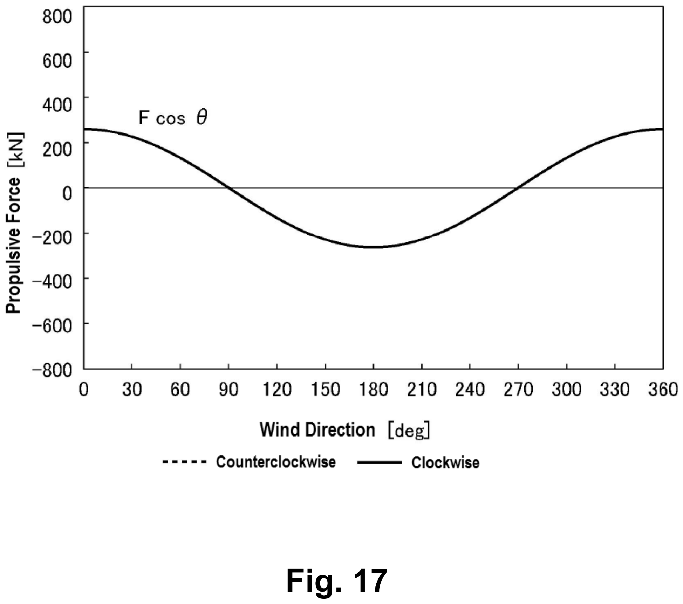

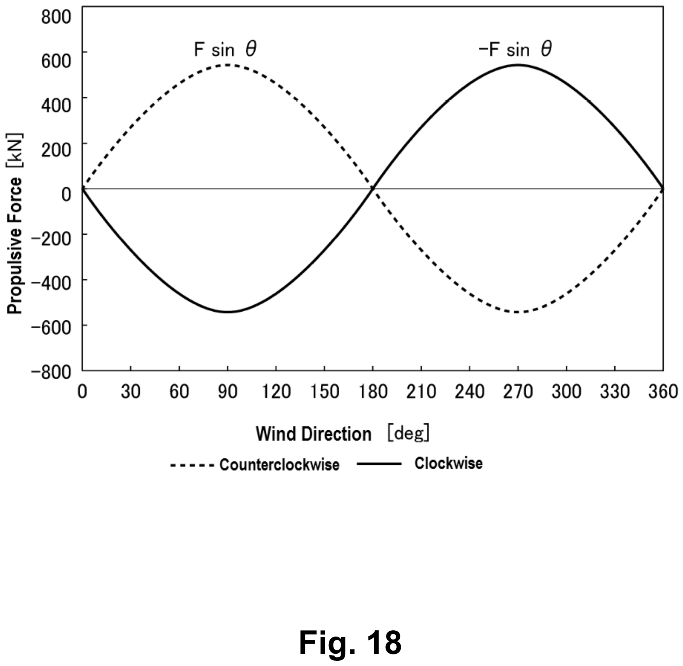

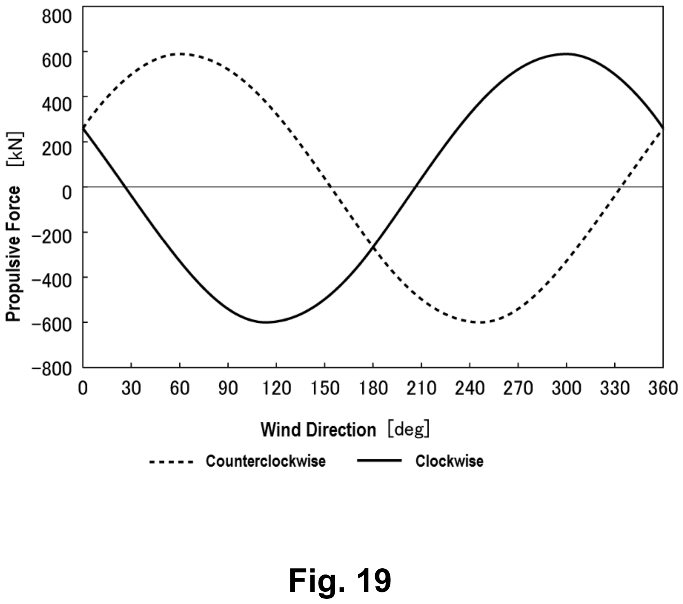

Fig. 17 illustrates a forward component of the lift of the blades. Fig. 18 illustrates a forward component of the Magnus force. Fig. 19 illustrates the propulsive force of the ship. In the graphs of Figs 17 to 19, the dashed curve indicates the case where the vertical blades rotate counterclockwise (leftward) about the vertical shaft as viewed from the top in the vertical direction, and the solid curve indicates the case where the vertical blades rotate clockwise (rightward) about the vertical shaft 5 as viewed from the top in the vertical direction. Note that in the graph of Fig. 17, the dashed curve (counterclockwise) and the solid curve (clockwise) overlap with each other, so only the solid curve is shown. In the graph of Fig. 17, the solid curve represents Fcosθ. In the graph of Fig. 18, the dashed curve represents Fsinθ, and the solid curve represents -Fsinθ. The graph of Fig. 19 is shown by summing the graphs of Figs. 17 and 18.

By referring to Figs. 17 through 19 together, it can be seen that the ship's propulsive force is obtained by summing the forward component of the lift force of the blades and the forward component of the Magnus force.

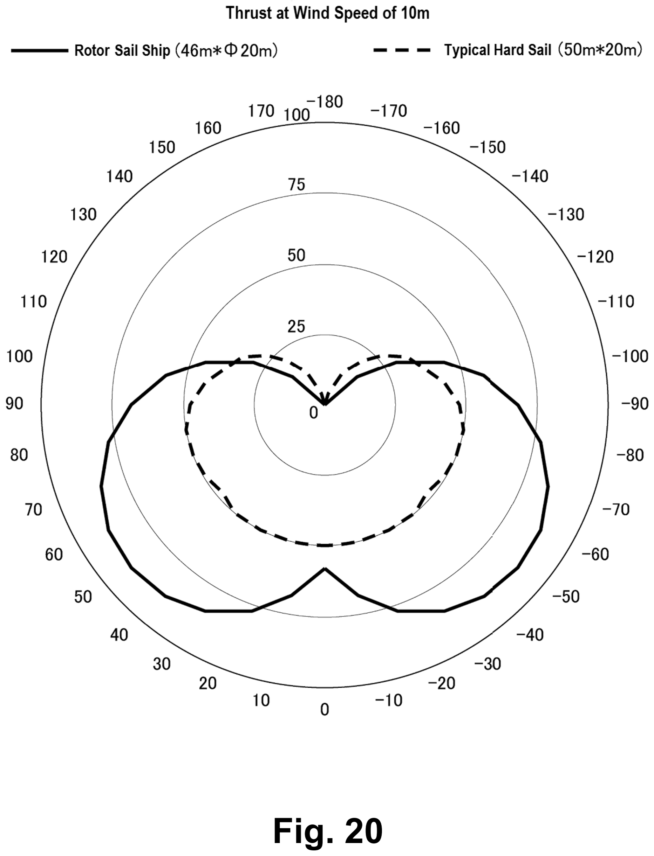

Fig. 20 illustrates an example of the relationship between the wind speed, number of rotations, and forward propulsive force. Fig. 20 corresponds to a diagram in which the propulsive force is plotted in a polar coordinate system relative to the wind direction. Fig. 20 shows values of the thrust obtained by analysis at a wind speed of 10 m/s. In the graph of Fig. 20, the dashed line on the inner side represents the case of a conventional hard sail (height: 50 m; width: 20 m), while the solid line on the outer side represents the case of a rotor sail ship (vertical blade height: 46 m; vertical support post outer diameter: 20 m).

By referring also to Fig. 20, it can be understood that the forward propulsive force in the propulsion direction varies depending on the number of rotations of the electric motor 41, which drives the vertical shaft 5. Although the forward propulsive force in the propulsion direction depends on the wind speed, wind direction, and number of rotations, it is difficult to control the wind speed and wind direction. Accordingly, it is preferable to adjust the forward propulsive force in the propulsion direction by controlling the number of rotations of the rotor sail with the electric motor 41.

<Relationship Between Phase and Thrust>

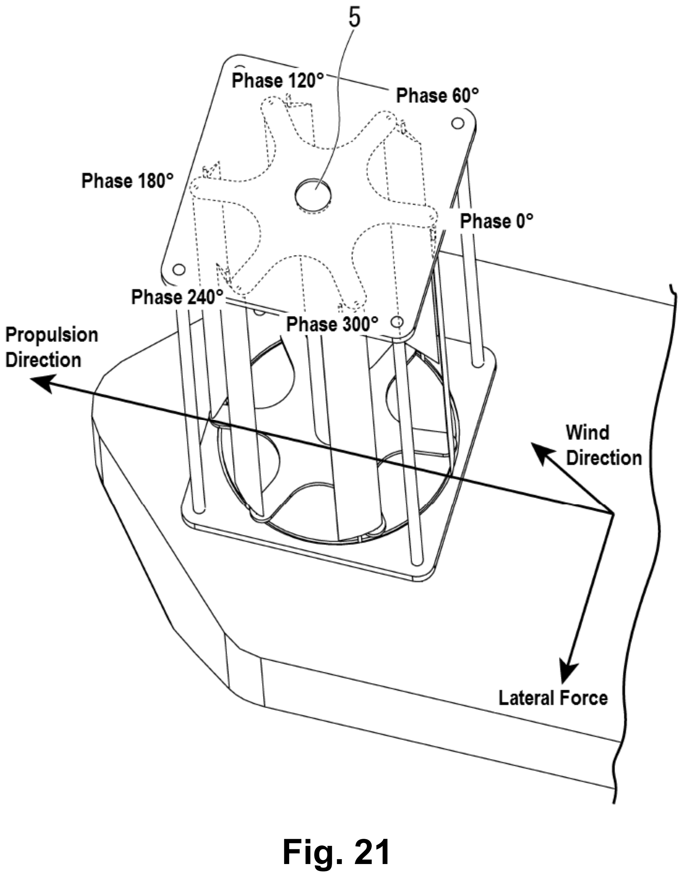

Fig. 21 illustrates a propulsion direction, wind direction, lateral force direction, and phase. In the example of Fig. 21, the bow of the rotor sail equipped vessel is shown, and phases are indicated from 0° to 300° at 60° intervals in a counterclockwise direction about the vertical shaft 5 of the rotor sail, with phase 0° assigned to the backward position in the propulsion direction. The propulsion direction, wind direction, and lateral force direction are respectively indicated by the arrows shown in Fig. 21.

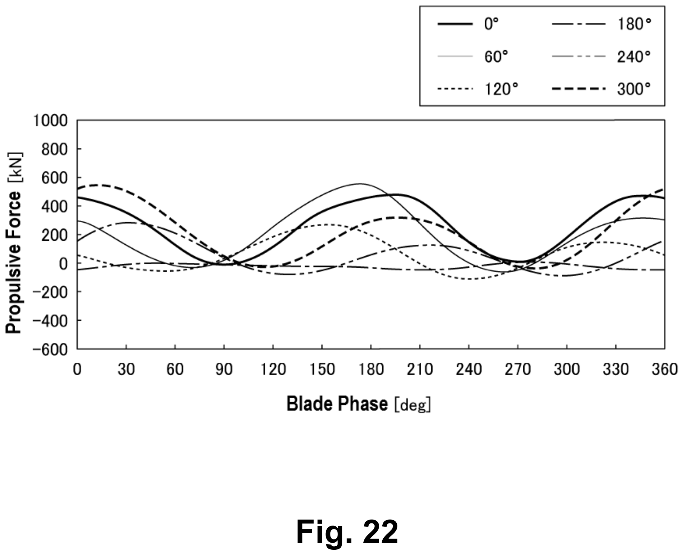

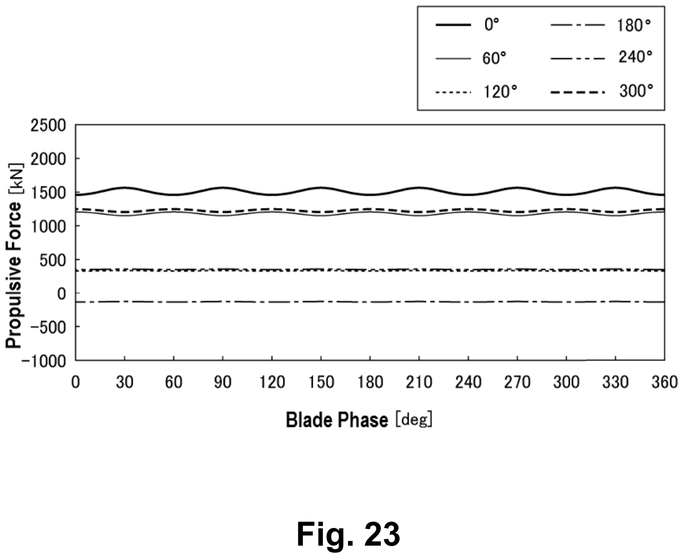

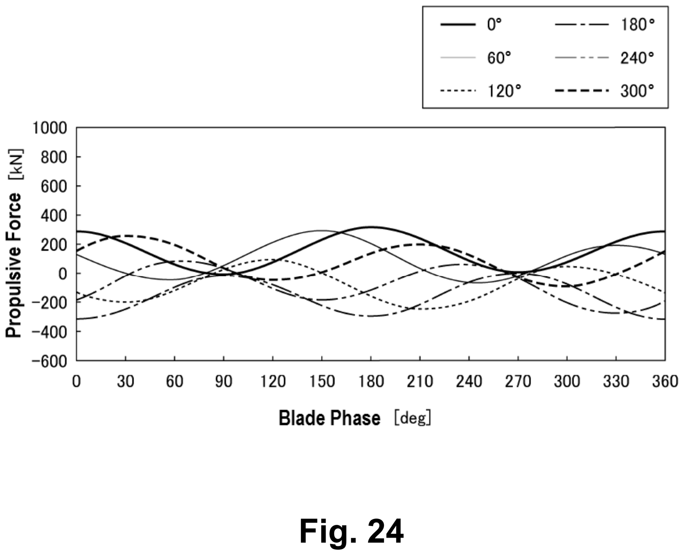

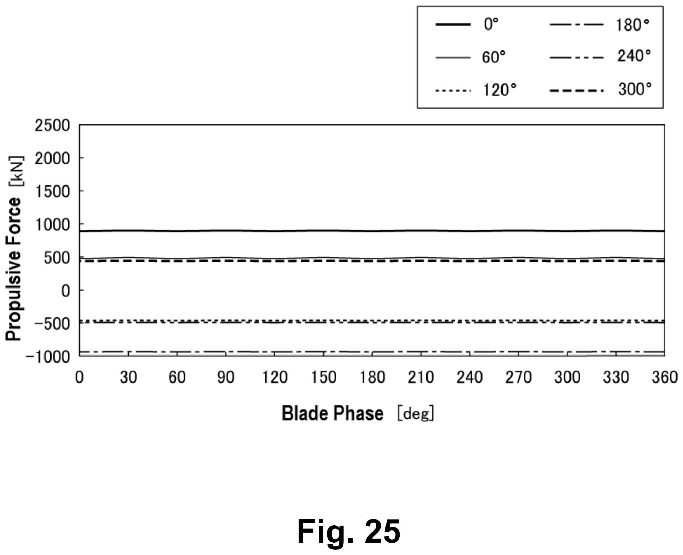

Fig. 22 illustrates an example of a relationship between the phase and the propulsive force in the case of the single vertical blade of the embodiment. Fig. 23 illustrates an example of the relationship between the phase and the propulsive force in the case of the six vertical blades of the embodiment. Fig. 24 illustrates an example of the relationship between phase and the propulsive force in the case of a single vertical blade of a comparative example. Fig. 25 illustrates an example of the relationship between phase and the propulsive force in the case of six vertical blades of the comparative example. In the graphs of Figs. 22 to 25, the solid line represents the case of phase 0 degrees, the thin line represents the case of phase 60 degrees, the dotted line represents the case of phase 120 degrees, the single dotted line represents the case of phase 180 degrees, the double dotted line represents the case of phase 240 degrees, and the broken line graph represents the case of phase 300 degrees.

The embodiment is the rotor sail 110 (see Fig. 1) equipped with the vertical blades 10A to 10F having an eccentricity of 0.25 m. The comparative example is a conventional vertical axis rotor sail with an eccentricity of 0 m (not shown). For each of the embodiment and comparative example, the relationship between the phase and the propulsive force was determined under the following conditions: rotor sail diameter of 20 m, rotor sail height of 45 m, wind speed of 10 m/s, and the number of rotations of the vertical blades of 50 rpm.

Referring to Figs. 22 through 25 together, it can be seen that the rotor sail of the embodiment provides higher propulsive force than the comparative example at each phase. For example, referring to Fig. 22, it was found that according to the embodiment, even with the single vertical blade, positive propulsive forces can be obtained except for phase 120 degrees and phase 180 degrees. For example, referring to Fig. 23, it was found that according to the embodiment, with the six vertical blades, positive propulsive forces can be obtained except for phase 180 degrees.

<Advantageous Effects>

As described above, the rotor sail system 1 includes: the vertical support post 4 extending vertically from the hull 3; the blades 10A to 10F connected to the shaft 5 rotatably about the shaft 5 extending in a predetermined direction with reference to the vertical support post 4; the detection unit 7 detecting the wind direction and wind speed in a navigation area of the ship 2; the receiving unit 8 receiving thrust commands to control thrust of the ship 2; and the rotation control unit 40 capable of controlling the rotational speed of the blades 10A to 10F about the shaft 5. The rotation control unit 40 controls the rotational speed of the blades 10A to 10F about the shaft 5 based on the received thrust commands and detection results of the wind direction and wind speed detected when the thrust commands are received.

With this configuration, the rotational speed of the blades 10A to 10F about the shaft 5 can be controlled depending on the wind direction and wind speed detected when the thrust command is received, thereby adjusting the thrust in accordance with the thrust command. In this way, the propulsive force can be adjusted.

In the rotor sail system 1 of the embodiment, the shaft 5 is the vertical shaft 5 extending in the vertical direction. The rotor sail system 1 further includes support members 20A and 20B extending away from the vertical shaft 5 and being connected rotatably about the vertical shaft 5. The blades 10A to 10F extend vertically, have the leading edge portions 11 supported by the support members 20A and 20B, and are rotatable about the vertical shaft 5. The rotation control unit 40 is capable of controlling a rotational speed of the vertical blades 10A to 10F rotating about the vertical shaft 5.

With this configuration, by controlling the rotational speed of the vertical blades 10A to 10F about the vertical shaft 5, the forward component of the lift of the vertical blades 10A to 10F and the forward component of the Magnus force can be utilized as the thrust.

In the rotor sail system 1 of this embodiment, two or more vertical blades 10A to 10F are provided. The two or more vertical blades 10A to 10F are provided at equal intervals in the circumferential direction around the vertical shaft 5.

For example, when two or fewer vertical blades are provided, or when multiple vertical blades are provided at unequal intervals, the lift becomes dependent on the wind direction. Whereas with the configuration of the embodiment, by providing the two or more vertical blades 10A to 10F at equal intervals in the circumferential direction around the vertical shaft 5, the lift is not dependent on the wind direction and can generate lift in the propulsion direction.

The rotor sail system 1 of the embodiment further includes the adjustment unit 30 that allows adjustment of the angle of attack of the vertical blades 10A to 10F. The adjustment unit 30 adjusts the angle of attack so that trailing edge portions 12 of the vertical blades 10A to 10F move along the eccentric circular track centered on the position offset toward the rear with reference to the vertical support post 4 in the propulsion direction, which is the direction in which the hull 3 is to be navigated.

For example, if the angle of attack remains the same regardless of the positions of the vertical blades, lift is generated only toward the wind direction. Whereas with the above configuration, the angle of attack is adjusted by the adjustment unit 30 so that the trailing edge portions 12 of the vertical blades 10A to 10F follow the eccentric circular track centered at the offset position rear with reference to the vertical support post 4 in the propulsion direction. Thus, the vertical blades 10A to 10F are tilted when located at a front position in the propulsion direction and raised when located at a rear position in the propulsion direction. Accordingly, the forward lift can be generated in the propulsion direction and directly utilized as thrust. Thus, the propulsive force can be effectively adjusted.

In the rotor sail system 1 of the embodiment, the adjustment unit 30 is connected to the vertical shaft 5 and has a guide rail 31 along the eccentric circular track. The vertical blades 10A to 10F each have a protrusion 14 that fits into the guide rail 31 at the trailing edge portions 12 of the vertical blades 10A to 10F.

With this configuration, the angle of attack can be adjusted on the eccentric circular track without electrical control, thereby reducing the work of control.

The rotor sail system 1 of the embodiment further includes the brake unit 45 that brakes the rotation of the vertical blades 10A to 10F about the vertical shaft 5 when the wind speed exceeding a threshold is detected by the detection unit 7.

With this configuration, the rotational speed of the vertical blades 10A to 10F can be reduced by braking their rotation about the vertical shaft 5 during strong winds, thereby reducing the lift. Therefore, there is no need to reduce sail area during strong winds, but the thrust can be reduced.

In the rotor sail system 1 of this embodiment, when changing the rotational speed of the vertical blades 10A to 10F rotating about the vertical shaft 5 by the rotation control unit 40, the steering gear control unit 125 controls the steering gear to steer to a direction opposite to the inertial force generated in a direction opposite to the direction of changing the rotational speed of the vertical blades 10A to 10F.

With this configuration, by anticipating the torque caused by the inertial force would impose on the hull 3, the steering gear control unit 125 cooperates with a rudder to counteract the torque and thus prevent the hull 3 from yawing.

In the rotor sail system 1 of the embodiment, the rotation control unit 40 includes the electric motor 41 capable of rotationally driving the vertical shaft 5.

With this configuration, it is possible to drive the rotation of the vertical shaft 5 and to both accelerate and decelerate the rotation of the vertical shaft 5.

The rotor sail system 1 of the embodiment further includes the energy storage unit 46 that stores regenerative energy generated by the electric motor 41 when the rotation of the vertical shaft 5 decelerates.

With this configuration, the regenerative energy of the electric motor 41 stored in the energy storage unit 46 can be utilized, contributing to energy savings.

The rotor sail system 1 of the embodiment further includes the obtaining unit 133 that obtains the wind speed and wind direction of the wind currently occurring. When the rotational speed of the vertical blades 10A to 10F about the vertical shaft 5, which rotate only by the wind currently occurring, is below a threshold, the rotation control unit 40 increases the rotational speed of the vertical blades 10A to 10F, using the electric motor 41.

In a typical lift type rotor sail, when the rotational speed of blades driven solely by the current wind is below a threshold (e.g., at rest), the angle of attack does not reach an optimal value, making spontaneous startup difficult. Whereas with the configuration of the embodiment, when the rotational speed of the vertical blades 10A to 10F driven solely by the current wind is below the threshold, the electric motor 41 forcibly rotates the vertical blades 10A to 10F, thereby enabling stable startup. For example, when the thrust that can be generated by the rotor sail rotating without energy supply based on the current wind speed and direction is insufficient to meet a thrust command, the thrust can be amplified by accelerating the rotation using the power of the electric motor 41.

In the rotor sail system 1 of the embodiment, the threshold is calculated based on the thrust command(s).

For example, the optimal rotational speed can be calculated from the thrust command(s), and based on the calculation result, the rotational speed of the vertical blades 10A to 10F can be increased by the electric motor 41.

In the rotor sail system 1 of the embodiment, the shaft 5 is the vertical shaft 5 extending in the vertical direction. The vertical support post 4 is rotatable about the vertical shaft 5 and may reverse its rotational direction depending on the wind direction.

With this configuration, the rotation of the vertical support post 4 in response to the wind direction enables the Magnus effect to be obtained on the outer circumference of the rotating vertical support post 4. Therefore, the forward component of the Magnus force of the vertical support post 4 can be utilized as thrust.

In the rotor sail system 1 of the embodiment, the vertical support post 4 is rotatable about the vertical shaft 5 and has the cylindrical shape along the vertical direction and the cylindrical portion 6 that is exposed to the outside.

With this configuration, the rotation of the vertical support post 4 makes it possible to get the Magnus effect on the cylindrical portion 6. Thus, the forward component of the Magnus force of the cylindrical portion 6 can be used as thrust.

Additionally, in the rotor sail system 1 of the embodiment, the vertical blades 10A to 10F are also arranged circumferentially. Thus, in addition to the Magnus force of the cylindrical portion 6, the Magnus effect can also be obtained circumference of the vertical blades 10A to 10F. Thus, the forward component of the Magnus force of the both can be used as thrust.

The ship integrated propulsion system 100 of the embodiment includes the rotor sail 110 that includes: the vertical support post 4 extending vertically from the hull 3; the blades 10A to 10F connected to the shaft and rotatable about the shaft 5 extending in a predetermined direction with reference to the vertical support post 4; the detection unit 7 detecting the wind direction and wind speed in a navigation area of the ship 2; the receiving unit 8 receiving thrust commands to control thrust of the ship 2; and the rotation control unit 40 capable of controlling the rotational speed of the blades 10A to 10F about the shaft 5. The system 100 further includes: the rotation control unit 40; the remote control device 120 equipped with the operation unit 121 that is operated to control a propulsion speed of the ship 2, the determining unit 134 that determines the target thrust of the rotor sail 110 and the target thrust of the propeller 51 driven by the prime mover 50 attached to the ship 2 in accordance with the operation position of the operation unit 121; the rotor sail control device 140 that controls the rotational speed of the blades 10A to 10F rotating about the shaft 5 according to the target thrust of the rotor sail 110; and the prime mover control device 150 that controls the rotational speed of the prime mover 50 according to the target thrust of the propeller 51.

With this configuration, it is possible to adjust the propulsive force with the rotation control unit 40. In addition, thrust can be supplemented by controlling the rotational speed of the blades 10A to 10F in accordance with the target thrust of the rotor sail 110, and controlling the rotational speed of the prime mover 50 in accordance with the target thrust of propeller 51.

<Second Embodiment>

The following describes a rotor sail of the second embodiment. In the following description, the parts having the same functions as in the first embodiment will have the same names and reference numerals, and their functions will not be specifically described.

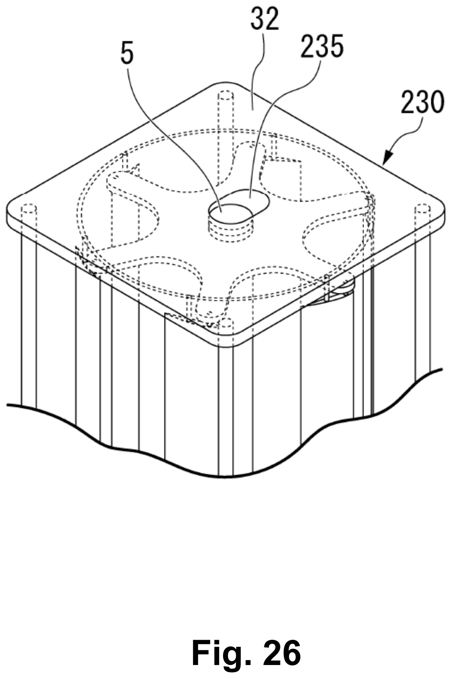

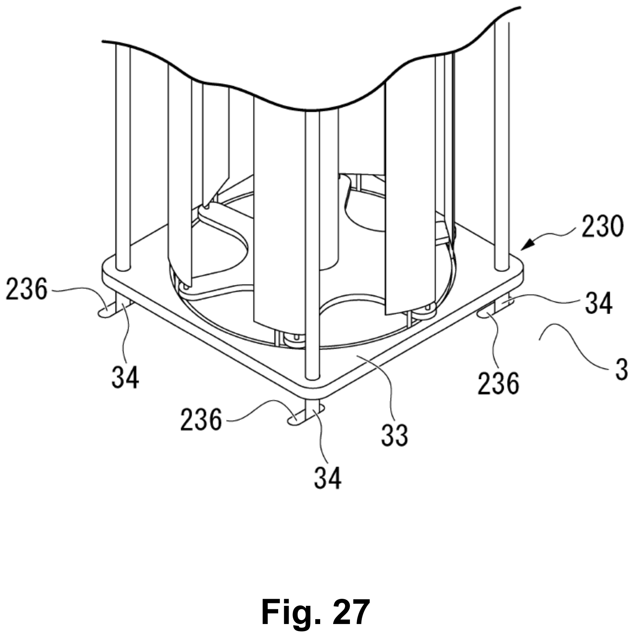

Fig. 26 is a perspective view of an upper part of the rotor sail of the second embodiment. Fig. 27 illustrates a perspective view of a lower part of the rotor sail of the second embodiment.

Referring to Figs. 26 and 27 together, an adjustment unit 230 of the second embodiment has a structure that allows adjustment of the eccentricity (R shown in Fig. 8).

In the example of Fig. 26, the adjustment unit 230 includes a top plate 32 with an upper guide hole 235 formed therein as a structure that allows adjustment of the eccentricity. For example, the upper guide hole 235 extends in a manner that allows the vertical shaft 5 to be shifted horizontally so that the eccentricity can be adjusted. In the example of Fig. 26, the upper guide hole 235 has an elongated shape that is larger than the outer shape of the vertical shaft 5 when viewed from the vertical direction. Note that the shape of the upper guide hole 235 is not limited to the above and can be changed depending on the design specifications.

In the example of Fig. 27, a lower guide hole 236 is formed in the portion of the hull 3 located under the bottom plate 33 in the vertical direction. For example, the lower guide hole 236 extends so that each support post 34 can be shifted horizontally to adjust the eccentricity. In the example of Fig. 27, the lower guide hole 236 has an elongated shape that is larger than the outer shape of the support post 34 when viewed from the vertical direction. Note that the shape of the lower guide hole 236 is not limited to the above and can be changed depending on the design specifications.

Alternatively, not limited to the examples of Figs. 26 and 27, it is also possible to provide a mechanism that allows either the center axis of the fixed plate (e.g., support members 20A and 20B) or one of the frames (e.g., top plate 32 and bottom plate 33) having the eccentric circular track to slide so that the eccentricity can be adjusted. For example, the configuration of the mechanism for adjusting the eccentricity can be changed depending on the design specifications.

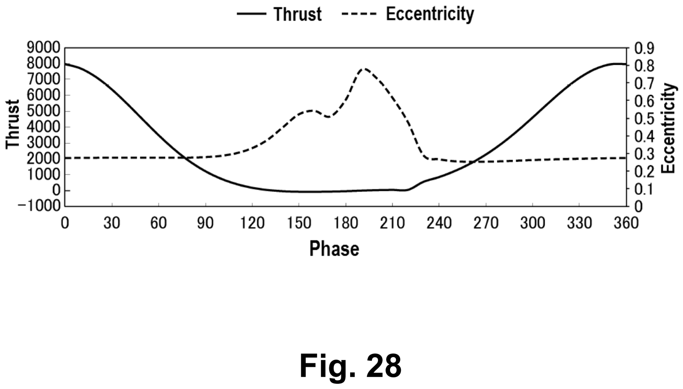

Fig. 28 illustrates an example of a relationship between the eccentricity and the thrust. In the graph of Fig. 28, the solid-line indicates the thrust, the dashed-line indicates the eccentricity.

As shown in Fig. 28, the eccentricity that produces the maximum thrust exhibits virtually no change when the wind direction is a following wind (phase 0°), within phase ranges of 120° or less and 240° or more. Accordingly, in a standard configuration, the eccentricity may be fixed. Because the adjustment unit 230 is subjected to large forces, fixing the eccentricity makes it easier to manufacture and more cost-effective than making it variable (adjustable). However, when it is desired to reduce thrust or to obtain thrust in the opposite direction, it is preferable to make the eccentricity adjustable.

For example, when a crosswind is blowing, in addition to forward thrust in the propulsion direction, a force toward the leeward side acts. In such a case, shifting the central axis of the fixed plate (e.g., support members 20A, 20B) toward the windward side reduces the lateral thrust. This configuration thus achieves an effect of suppressing capsizing.

<Third Embodiment>

The following describes a rotor sail of the third embodiment. In the following description, the parts having the same functions as in the first embodiment will have the same names and reference numerals, and their functions will not be specifically described.

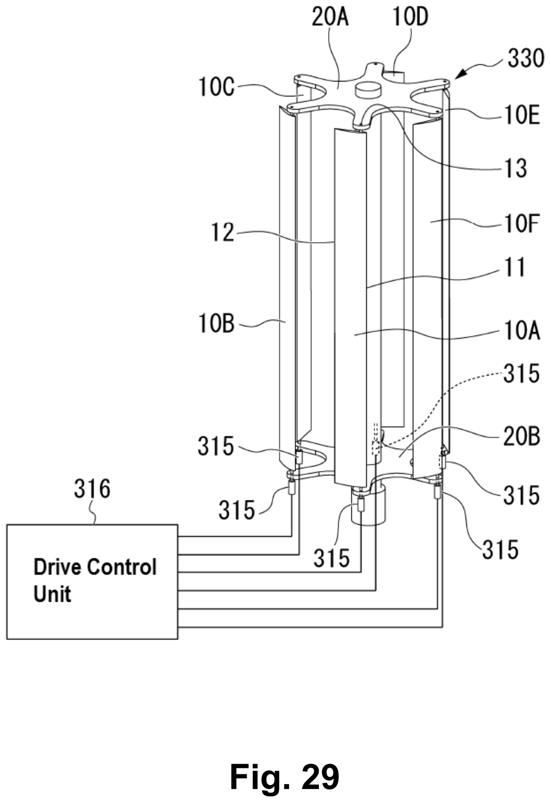

Fig. 29 is a perspective view of the rotor sail of the third embodiment.

As shown in Fig. 29, the leading edge portions 11 of the vertical blades 10A to 10F are connected to the support members 20A and 20B rotatably about respective rotation shafts 13 extending vertically . An adjustment unit 330 includes electric motors 315 capable of adjusting the angle of attack by driving the rotation shafts 13, and a drive control unit 316 that controls the electric motors 315 so that the trailing edge portions 12 of the vertical blades 10A to 10F move on an eccentric circular track.

The electric motors 315 are attached to the lower ends of the respective rotation shafts 13 of the vertical blades 10A to 10F. The electric motors 315 enable both the rotation of the rotation shafts 13 and the acceleration and deceleration of the vertical blades 10A to 10F rotating about the respective rotation shafts 13. In the illustrated example, the electric motor 315 is attached to the lower end of each rotation shaft 13. Note that how to attach the electric motors 315 (number and arrangement, etc.) is not limited to the above and can be changed depending on the design specifications.

The drive control unit 316 controls the rotational speed of the blades 10A to 10F rotating about the respective rotation shafts 13 based on the thrust commands received by the receiving unit 8 and detection results of the wind direction and wind speed detected when the thrust commands are received. For example, the drive control unit 316 may control the electric motors 315 attached to the lower ends of the rotation shafts 13 simultaneously or independently.

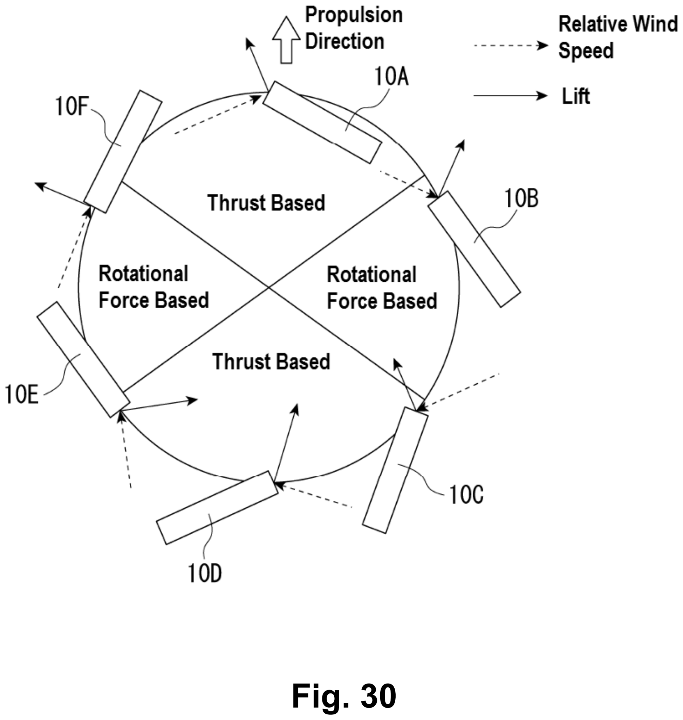

Fig. 30 illustrates an example of the rotation control of the vertical blades 10A to 10 F of the third embodiment.

With reference to Fig. 30, in order to achieve the optimum angle of attack, the track on which the trailing-edge portions 12 of the vertical blades slid is preferably defined as an optimal curve. For example, the electric motor 315 mounted at the lower end of each rotation shaft 13 adjusts the angle of attack. For the vertical blades 10A and 10D, which are located at the forward and rearward positions relative to the vertical support post 4 in the propulsion direction, the angle of attack is adjusted to the value that maximizes forward lift. For the vertical blades 10B and 10F, which are located to the left and right of the vertical support post 4, the angle of attack is adjusted to the value that maximizes rotational torque.

Note that from the standpoint of optimizing the angle of attack, a circular track is not necessarily optimal. By making the track on which the trailing edge portions 12 of the vertical blades slide an arbitrary curve, the angle of attack can likewise be desirably adjusted. Moreover, the angle of attack may be controlled directly by the electric motors 315 attached to the lower ends of the rotation shafts 13. Thus, for example, regardless of the wind direction or wind speed, the angle of attack can be set to its optimum at any desired timing.

For example, thrust is contributed in the area where the vertical blades 10A to 10F pass in front of and behind the vertical support post 4 in the propulsion direction. On the other hand, the phases at which the rotational force acts vary depending on the wind direction. Therefore, it is preferable to set the front and rear phases to an angle of attack based on the thrust, and to set the left and right phases to an angle of attack based on rotational force. As a result, the vertical blades 10A to 10F can spontaneously accelerate their rotation to high speed, thereby further enhancing the lift.

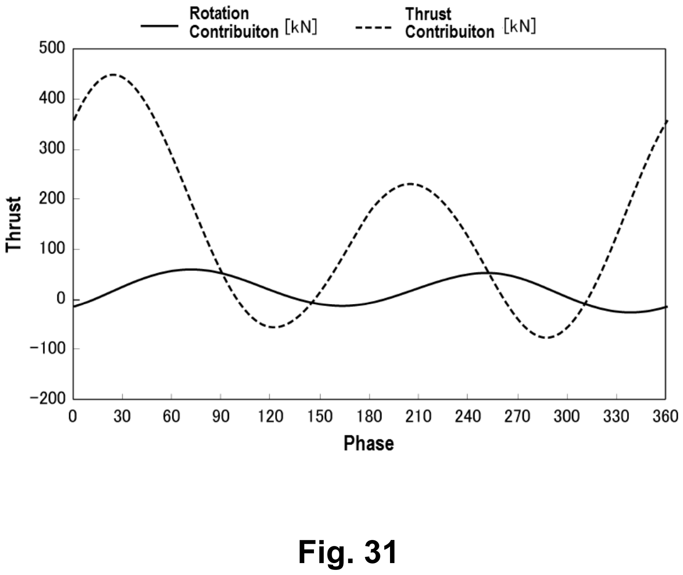

Fig. 31 illustrates an example of a relationship between thrust contribution and rotation contribution. In the graph of Fig. 31, the solid line represents the rotation contribution, and the dashed line represents the thrust contribution.

In the example of Fig. 31, at a phase of 30°, the angle of attack is set for the thrust contribution, resulting in the maximum thrust. Whereas in the phase range from 150° to 180°, the angle of attack is set for the rotation contribution, and virtually no thrust is generated.

<Advantageous Effects>

In the rotor sail system of this embodiment, the leading edge portions 11 of the vertical blades 10A to 10F are connected to the support members 20A and 20B rotatably about respective rotation shafts 13 extending vertically. The adjustment unit 330 includes the electric motors 315 capable of adjusting the angle of attack by driving the rotation shafts 13, and the drive control unit 316 that controls the electric motors 315 so that the trailing edge portions 12 of the vertical blades 10A to 10F move on the eccentric circular track.

With this configuration, the angle of attack can be adjusted by electrical control.

<Fourth Embodiment>

The following describes a rotor sail system of the fourth embodiment. In the following description, the parts having the same functions as in the first embodiment will have the same names and reference numerals, and their functions will not be specifically described.

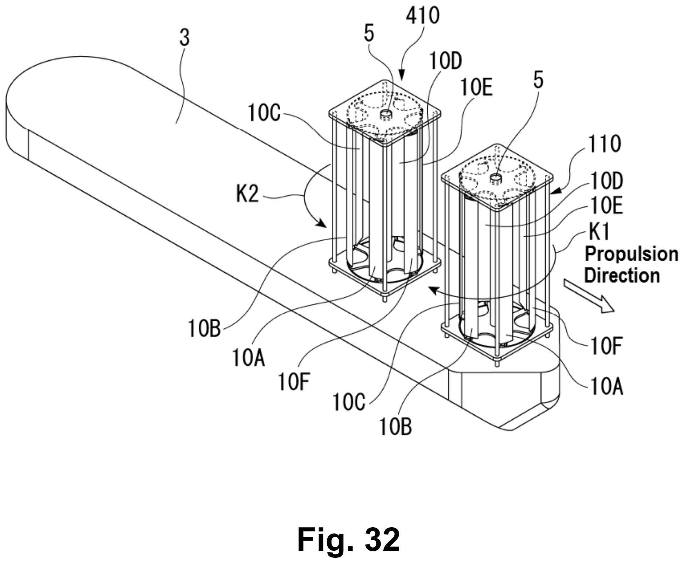

Fig. 32 is a perspective view of the rotor sail system of the fourth embodiment.

As shown in Fig. 32, the wind sail system is equipped with two rotor sails 110 and 410 on the front part (bow side) of the hull 3. Hereinafter, of the two rotor sails 110 and 410, the one located in front in the propulsion direction is referred to as "first rotor sail 110," and the one located behind the first rotor sail 110 is referred to as "second rotor sail 410." The installation configuration (installation location, number of units, etc.) of the rotor sail is not limited to the above and can be changed depending on the design specifications.

In each of the first rotor sail 110 and the second rotor sail 410, the vertical blades 10A to 10F are rotatable about the vertical shaft 5. Furthermore, the vertical blades 10A to 10F of each of the first rotor sail 110 and the second rotor sail 410 are oriented in opposite rotational directions about the respective vertical shafts 5.

The rotation control unit 40 is capable of controlling a rotational speed of the vertical blades 10A to 10F rotating about the vertical shaft 5 in each of the first rotor sail 110 and the second rotor sail 410. The second rotor sail 410 may be controlled such that the vertical blades 10A to 10F thereof rotate in the direction (the direction of arrow K2 around the second rotor sail 410 in Fig. 32) opposite to the direction of arrow K1 around the rotor sail 110 in Fig. 32 (the direction of the inertial force generated in the direction opposite to the direction of changing the rotational speed of the vertical blades 10A to 10F).

For example, when applying brakes or driving to change the rotational speed of the vertical blades 10A to 10F, torque may act on the hull 3, causing the hull 3 to rotate. To prevent this, when installing the two rotor sails 110 and 410, it is preferable to reverse the rotation direction of the vertical blades 10A to 10F about the vertical shaft 5 between the rotor sail 110 and the rotor sail 410 so that the hull 3 does not rotate.

<Fifth Embodiment>

The following describes a rotor sail system of the fifth embodiment. In the following description, the parts having the same functions as in the first embodiment will have the same names and reference numerals, and their functions will not be specifically described.

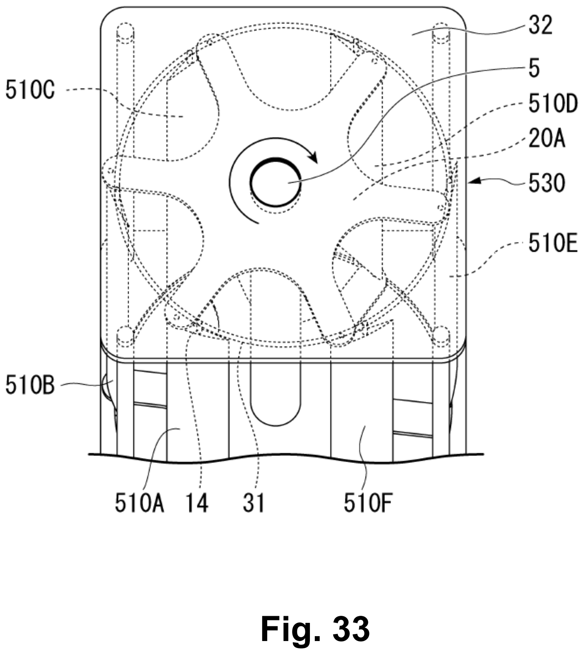

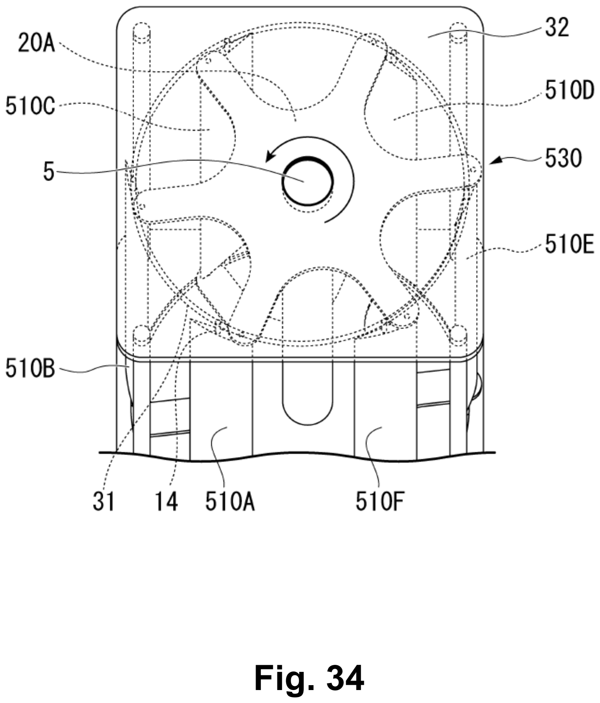

Fig. 33 illustrates an example of forward rotation of vertical blades 510A to 510F of the fifth embodiment. Fig. 34 illustrates an example of reverse rotation of the vertical blades 510A to 510F of the fifth embodiment.

With reference to Figs. 33 and 34, the rotor sail is configured so that the front and rear sides of the vertical blades 510A to 510F are interchangeable, thereby permitting both forward and reverse rotation of the vertical blades 510A to 510F about the vertical shaft 5. The vertical blades 510A to 510F are each provided with a projection 14 that is insertable into and retractable from the guide rail 31. The adjustment unit 530, when the vertical blades 510A to 510F are reverse-rotated about the vertical shaft 5 under control of the rotation control unit 40, moves the protrusions 14 into and out of the guide rail 31 so that, the leading edges of the vertical blades 510A to 510F face opposite to their orientation during the forward rotation along the eccentric circular track.

For example, the adjustment unit 530 may be configured to include a solenoid that allows the protrusions 14 to be inserted into and retracted from the guide rail 31. For example, by retracting the protrusions 14 fitted in the guide rail 31 with the solenoid, it is possible to switch the front and rear of the vertical blades 510A to 510F. For example, the adjustment unit 530 may include not only the solenoid but also a one-way mechanism that automatically retracts the protrudes 14 in accordance with the rotation of the vertical blades 510A to 510F, thereby enabling the front and rear of the vertical blades 510A to 510F to be switched. Note that the configuration for enabling the front-rear switch of the vertical blades 510A to 510F is not limited to the above and may be changed depending on design specifications.

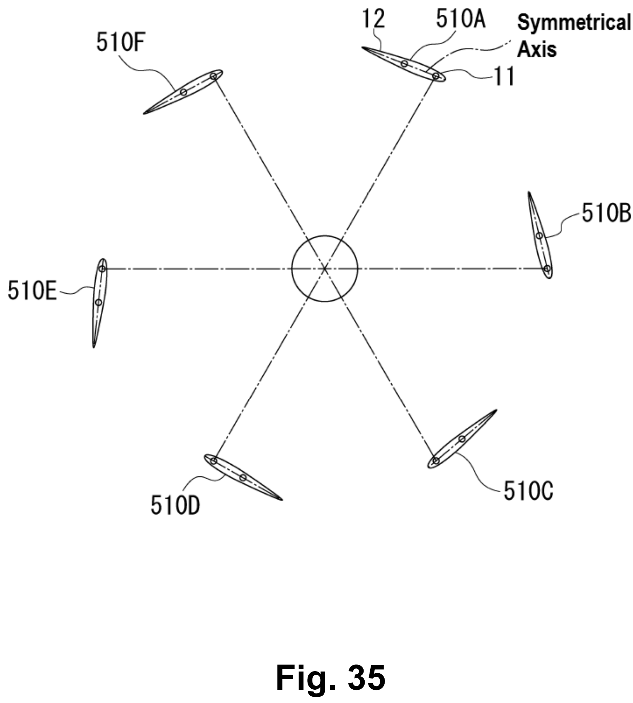

Fig. 35 illustrates the shape of the vertical blades 510A to 510F of the fifth embodiment.

Referring to Fig. 35, the shape of the respective vertical blades 510A to 510F is symmetrical in its front-to-rear direction. Specifically, the vertical blades 510A to 510F have a line-symmetrical shape with respect to a line connecting the leading edge and trailing edge as the axis of symmetry when viewed from the vertical direction. In the illustrated example, each of the six vertical blades 510A to 510F has a line-symmetrical shape when viewed from the vertical direction. Note that the shape of the vertical blades 510A to 510F when viewed from the vertical direction is not limited to the above and can be changed depending on design specifications.

In the rotor sail system of this embodiment, the vertical blades 510A to 510F are each provided with the projection 14 that is insertable into and retractable from the guide rail 31. The adjustment unit 530, when the vertical blades 510A to 510F are reverse-rotated about the vertical shaft 5 under control of the rotation control unit 40, moves the protrusions 14 into and out of the guide rail 31 so that, the leading edges of the vertical blades 510A to 510F face opposite to their orientation during the forward rotation along the eccentric circular track.

With this configuration, the thrust can be adjusted by rotating the vertical blades 510A to 510F in the forward and reverse directions about the vertical shaft 5.

<Sixth Embodiment>

The following describes a rotor sail system of the sixth embodiment. In the following description, the parts having the same functions as in the first embodiment will have the same names and reference numerals, and their functions will not be specifically described.

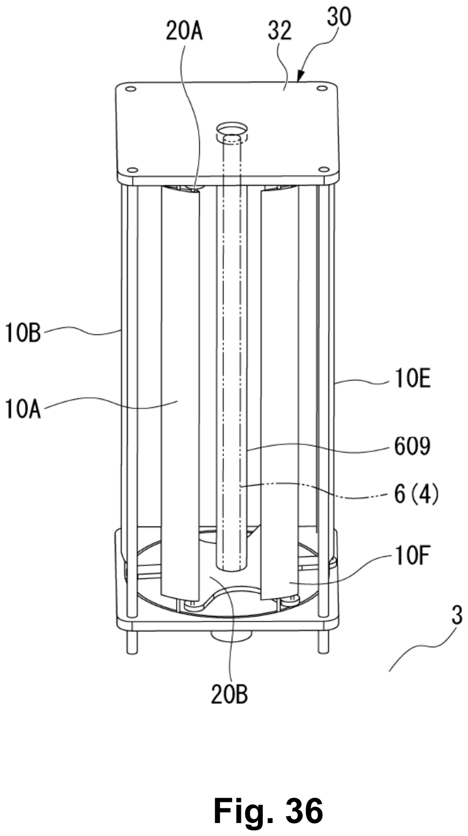

Fig. 36 is a perspective view of the rotor sail of the sixth embodiment.

As shown in Fig. 36, the rotor sail further includes a fixed post 609 fixed to the hull 3. The fixed post 609 is cylindrical and extends in the vertical direction. The fixed post 609 covers the cylindrical portion 6 of the vertical support post 4.

As described above, when the cylinder rotates in the wind, the Magnus effect occurs. In this embodiment, the cylindrical portion 6 of the rotating vertical support post 4 is covered by the fixed post 609, thereby shielding it from the wind. For example, when the rotational direction of the cylindrical portion 6 of the vertical support post 4 cannot be switched, it is desirable to place the rotating vertical support post 4 inside the fixed post 609 to shield it from the wind so that it does not receive the Magnus effect. This prevents a decrease in thrust when crosswind blows or the like.

The rotor sail system of this embodiment further includes the tubular fixed post 609 that is fixed to the hull 3, extends vertically, and covers the cylindrical portion 6.

With this configuration, it is possible to avoid the Magnus effect caused by the cylindrical portion 6, thereby avoiding a reduction in the thrust due to wind direction.

<Seventh Embodiment>

The following describes a rotor sail system of the seventh embodiment. In the following description, the parts having the same functions as in the first embodiment will have the same names and reference numerals, and their functions will not be specifically described.

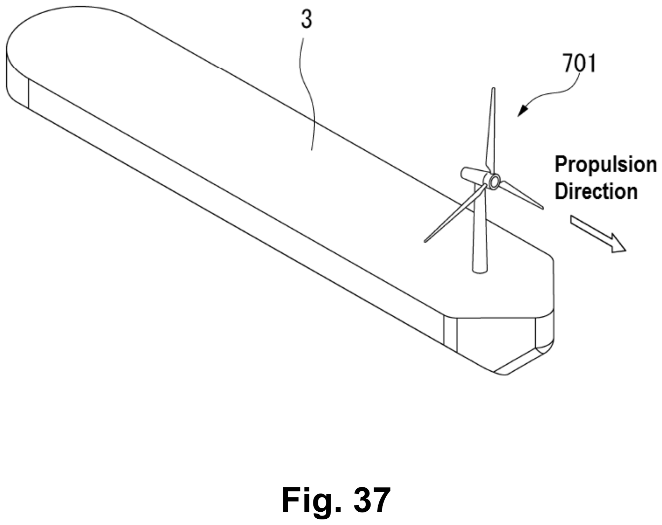

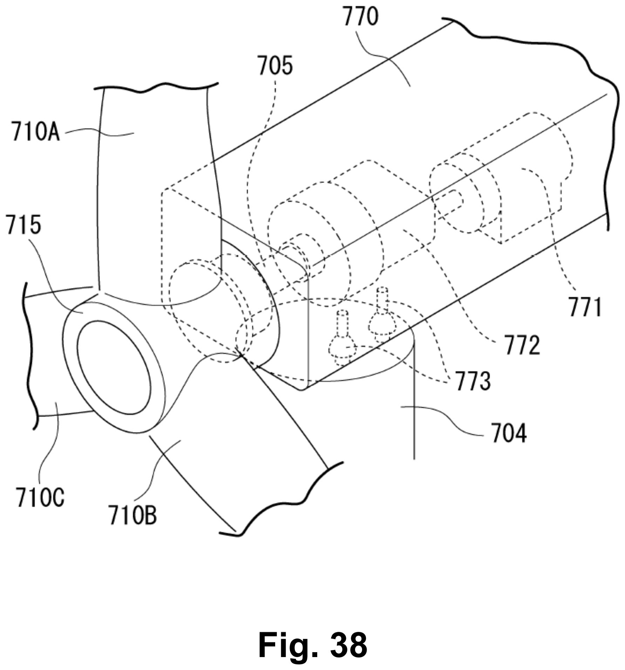

Fig. 37 is a perspective view of the rotor sail system of the seventh embodiment. Fig. 38 is a perspective view of a nacelle 770 and blades 710A, 710B, and 710C of the seventh embodiment.

Referring to Figs. 37 and 38 together, the rotor sail system is equipped with a horizontal axis wind turbine 701 above the bow. The axis of the horizontal axis wind turbine 701 of this embodiment is a horizontal shaft 705 extending in the horizontal direction.

The horizontal axis wind turbine 701 includes a vertical support post 704, the nacelle 770, the blades 710A, 710B, and 710C (one example of the blades), and a hub 715.

The nacelle 770 is attached to the upper end of the vertical support post 704. The nacelle 770 is rotatable (yawing) about the vertical support post 704. For example, a yaw drive device 773 capable of yawing the nacelle 770 is provided at the upper end of the vertical support post 704.

The shape of the blades 710A, 710B, and 710C is elongated and flat. The blades 710A, 710B, and 710C are arranged radially around hub 715. The bases of the blades 710A, 710B, and 710C are attached to the hub 715. In the illustrated example, the three blades 710A, 710B, and 710C are arranged at equal intervals around the horizontal axis 705 in the circumferential direction. Note that the configuration of the blades 710A, 710B, and 710C (such as the number and arrangement) is not limited to the above and can be changed depending on design specifications.

For example, generator 771 and speed increaser 772 are provided inside the nacelle 770. The rotation of the horizontal shaft 705 connected to the hub 715 is increased by speed increaser 772. Power generation is performed by transmitting the speed-increased rotational force to the generator 771.

In the horizontal axis wind turbine 701, three rotations occur. The first rotation is a yaw rotation in which the nacelle 770 rotates about the vertical support post 704. The second rotation is a horizontal axis rotation in which the hub 715, to which the blades 710A, 710B, and 710C are attached, rotates about the horizontal shaft 705. The third rotation is a pitch rotation, in which the blades 710A, 710B, and 710C rotate about an axis parallel to their longitudinal direction.

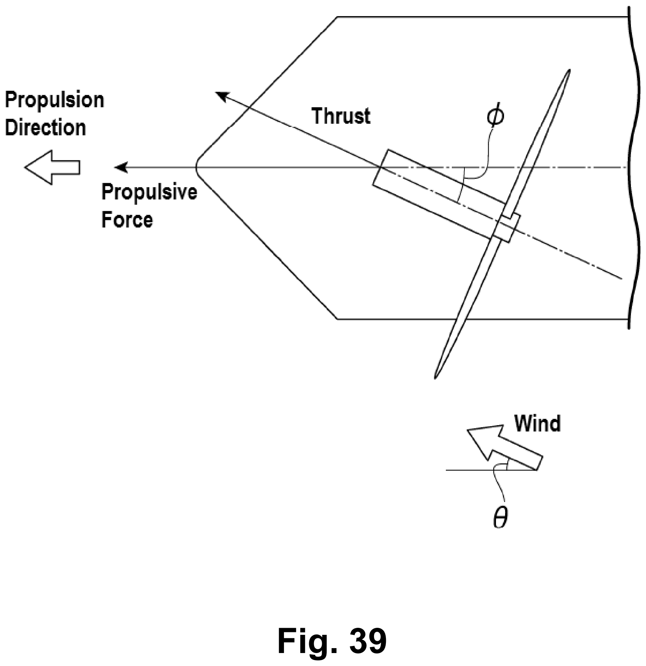

Fig. 39 illustrates a relationship between the wind direction, thrust, and propulsive force.

In the example of Fig. 39, assume that the wind direction is at an angle $\theta$ to the propulsion direction. When the blades are rotated at an angle $\varphi$ to the propulsion direction, the wind speed component received by the wind turbine becomes $\cos(\theta-\varphi)$ times greater. Since the thrust is applied in the direction of the horizontal axis, the propulsive force becomes $\cos \varphi$ times greater.

Compared to when the wind is blowing from behind, the propulsive force is greatest when $\varphi = \theta/2$ in the equation $\cos (\theta - \varphi) \cos \varphi = (\cos \theta + \cos (\theta - 2\varphi))/2$, and thus becomes $(1 + \cos \theta)/2$ times greater.

For example, when a crosswind blows, it is effective to change the direction of the wind turbine so that the blades rotate while the forward propulsive force is obtained. For example, it is effective to adjust the yaw angle so that it forms an equilateral angle with the wind direction and the propulsion direction. In the case of the horizontal axis wind turbines, the maximum propulsive force is achieved when a tailwind blows. For example, adjusting the yaw angle so that it forms an equilateral angle with the wind direction and the propulsion direction will maximize the propulsive force in the propulsion direction.

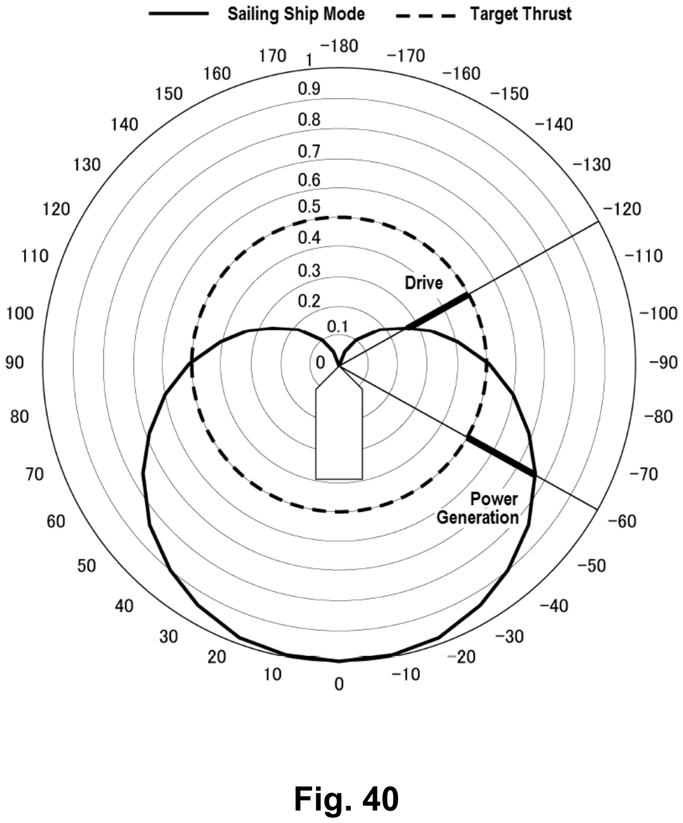

Fig. 40 illustrates an example of a relationship between the target thrust and a sailing ship mode. Fig. 40 shows the propulsive force in polar coordinates (polar chart). In Fig. 40, the circumferential axis (circumferential direction axis) indicates the wind direction (left is forward), and the radial axis (radial direction axis) indicates magnitude of the propulsive force.

Referring to Fig. 40, it can be seen that the propulsive force in the sailing ship mode is zero when the ship receives the wind from the left and the propulsive force is maximum when the ship receives the wind from the right.

As mentioned above, in the case of the horizontal axis wind turbine, the propulsive force also changes depending on the number of rotations. Thus, when the propulsive force that can be generated without energy exceeds the target thrust, it is preferable to reduce the number of rotations by diverting the excess to power generation. Whereas when the propulsive force is insufficient, it is preferable to use energy to drive.

<Eighth Embodiment>

The following describes a rotor sail system of the eighth embodiment. In the following description, the parts having the same functions as in the first embodiment will have the same names and reference numerals, and their functions will not be specifically described.

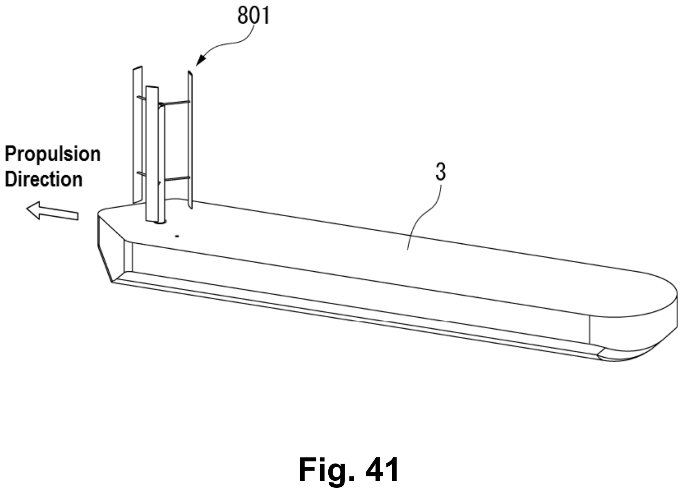

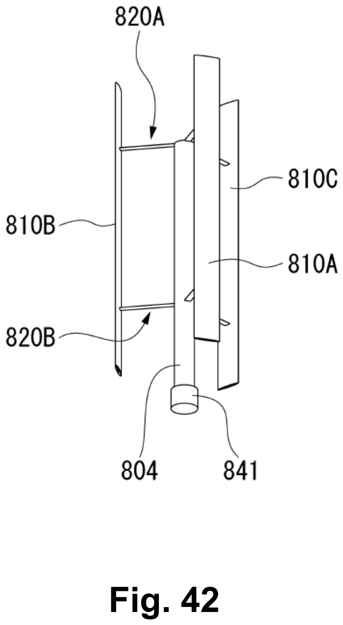

Fig. 41 is a perspective view of the rotor sail system of the eighth embodiment. Fig. 42 is a perspective view of the rotor sail of the eighth embodiment.

Referring to Figs. 41 and 42 together, the rotor sail system is equipped with a vertical axis rotor sail 801 (one example of the rotor sail) above the bow.

The vertical axis rotor sail 801 includes a vertical support post 804, support members 820A and 820B, vertical blades 810A to 810C, and an electric motor 841. In the illustrated example, three vertical blades 810A to 810C are provided at equal intervals in the circumferential direction around the vertical support post 804. Note that the configuration of the vertical blades 810A to 810C (number and arrangement, etc.) is not limited to the above and may be changed depending on the design specifications.

In the illustrated example, the electric motor 841 is attached to the lower end of the vertical support post 804. The electric motor 841 enables both the rotation of the vertical support post 804 and the acceleration and deceleration of the rotation of the vertical support post 804. In other words, the electric motor 841 enables both the rotation of the vertical blades 810A to 810C about the vertical support post 804 and the acceleration and deceleration of the rotation of the vertical blades 810A to 810C about the vertical support post 804.

In the illustrated example, the vertical axis rotor sail 801 does not have the adjustment unit that can adjust the angle of attack of the vertical blades 810A to 810C. In other words, the vertical axis rotor sail 801 is not configured to control the pitch angle. The pitch angle refers to the angle formed between the axis (blade rotation axis) tangent to the rotational direction of the vertical blades and the line segment connecting the leading edge and trailing edge of the vertical blade as viewed from the vertical direction.

<Relationship Between Blade Lift, Blade Rotational Force, And Wind Direction Component Force>

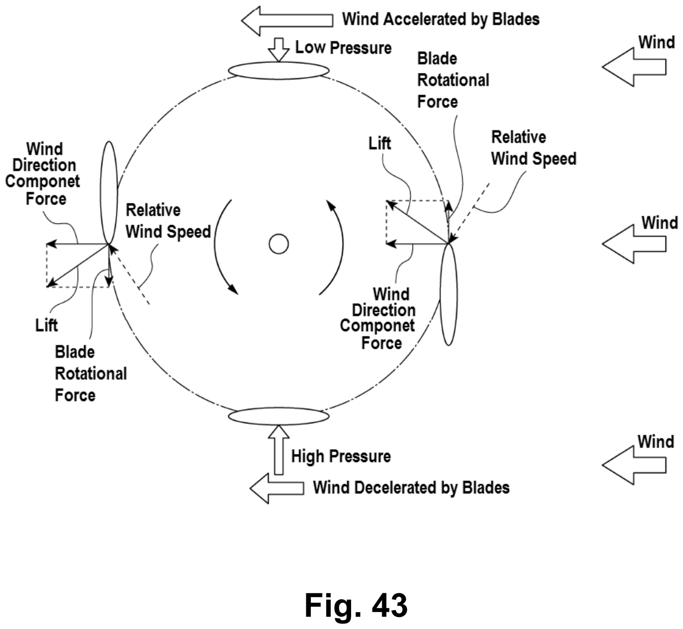

Fig. 43 illustrates a relationship between the lift forth of the blades, blade rotational force, and wind direction component force. The example of Fig. 43 shows a rotor sail with four blades. The number of blades is not limited to the above and can be changed depending on design specifications. In the example of Fig. 43, the wind blows from the right to the left side in the figure.

As shown in Fig. 43, the circumferential component of the blade lift becomes the blade rotational force, and the radial component of the blade lift becomes the wind direction component force. Due to the rotation of the blades, the wind shown on the upper side in Fig. 43 accelerates, and the wind shown on the lower side in Fig. 43 decelerates. As a result, a pressure difference occurs between the upper and lower sides in Fig. 43, and this pressure difference becomes the orthogonal component force. This principle is the same as the Magnus effect. Thus, the Magnus effect can be generated not only by the cylinder but also by blades. In the example of Fig. 43, the Magnus effect can also be obtained on a circular track centered on the vertical axis and passing through the leading edges of the blades (the circular track indicated by the dashed line in Fig. 43).

<Energy Flow In Rotor sail System>

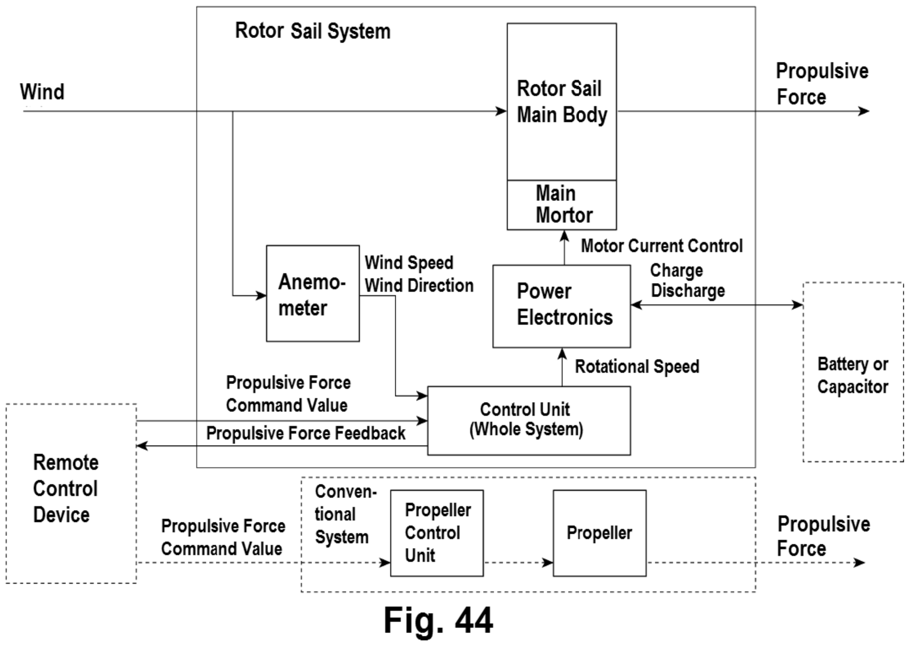

Fig. 44 illustrates an example of flows of energy and the like in the rotor sail system, along with a comparative example. Fig. 44 shows the flows of physical objects, information, and electricity (an example of the flows of energy) using various arrows.

As shown in Fig. 44, in the comparative example (conventional system), the wind power is first converted into rotational force to rotate the propeller. Therefore, in the comparative example, this conversion of force causes a decrease in propulsion efficiency.

Whereas in the rotor sail system of the embodiment, the rotor sail is treated as a propeller, and the lift generated by the rotor sail rotated by wind is directly used as propulsive force. In other words, in the rotor sail system of the embodiment, wind is directly used as the propulsive force. Therefore, in the rotor sail system of the embodiment, the propulsive efficiency is improved compared to the comparative example.

In the rotor sail system of the embodiments, wind is received by the rotor sail and converted into the propulsive force. For example, just as a sailboat converts wind into propulsive force using sails, a rotor sail ship directly converts wind into propulsive force using the rotor sail. The rotor sail system of the embodiments is characterized by converting wind into propulsive force as a sailboat. Furthermore, in the rotor sail system of the embodiments, the performance of the rotor sail as a sail is superior to that of a typical hard sail.

<Modification Examples>

The technical scope of the present invention is not limited to the embodiments described above but is susceptible of various modifications within the purport of the present invention.

The functions of the control unit according to the embodiments described above may be implemented in a program stored on a computer-readable storage medium, and the program stored on the storage medium may be loaded onto a computer system that then executes the program for processing.

The "computer system" mentioned above may include an operating system (OS) or hardware such as peripheral devices.

The "computer-readable storage medium" mentioned above refers to a storage device such as a portable medium like a flexible disc, a magneto-optical disc, a ROM (Read Only Memory), a flash memory or other writable non-volatile memory, and a DVD (Digital Versatile Disc), and a hard disk built-in to the computer system.

Further, the "computer-readable storage medium" includes storage media that retain the program for some period of time, like a volatile memory (for example, DRAM (Dynamic Random Access Memory)) in an information processing device receiving the program through a network such as the Internet or a communication line such as a telephone line, or in a computer system that operates as a client.

The program mentioned above may be transmitted from a computer system that includes a storage device or the like storing the program to another computer system through a transmission medium or by a transmission wave in a transmission medium. The "transmission medium" for transmitting the program refers to a medium that operates to transmit information, like a network (communication network) such as the Internet or a communication line (communication wire) such as the telephone line.

Only a part of the functions described above may be implemented in the above program. Further, the functions described above may be implemented by a combination of the above program and other programs previously stored on the computer system. That is, the above program may be what is called a difference file (a difference program).

The elements of the embodiments described above may be replaced with known elements within the purport of the present invention. Further, the modification examples described above may be combined.

In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention.

According to the foregoing embodiments disclosed herein, a plurality of functions may be distributively provided. Some or all of these functions may be integrally provided. Conversely, a different plurality of functions may be integrally provided. Some or all of these functions can be distributively provided. Irrespective of whether the functions are integrated or distributed, they are acceptable as long as they are configured to attain the object of the invention.

REFERENCE SIGNS LIST

1... Rotor sail system, 2... Ship, 3... Hull, 4... Vertical support post, 5... Vertical shaft (axis), 6... Cylindrical portion, 7... Detection unit, 8... Receiving unit, 10A to 10F... Vertical blade (blade), 11... Leading edge portion, 12... Trailing edge portion, 13... Rotation shaft, 14... Protrusion, 20A, 20B... Support member, 30...Adjustment unit, 31...Guide rail, 40...Rotation control unit, 41...Electric motor, 45...Brake unit, 46...Energy storage unit, 50... Prime mover, 51... Propeller, 100...Ship integrated propulsion system, 110...Rotor sail, 120...Remote control device, 121...Operation unit, 125...Steering gear control unit, 133...Obtaining unit, 134...Determining unit, 140...Rotor sail control device, 150...Prime mover control device, 230... Adjustment unit, 315...Electric motor, 316...Drive control unit, 330...Adjustment unit, 410...Second rotor sail (Rotor sail), 510A to 510F...Vertical blade, 530...Adjustment unit, 609...Fixed post, 701...Horizontal axis wind turbine, 704... Vertical support post, 705...Horizontal shaft, 710A to 710C...Blade, 801...Vertical axis rotor sail, 804... Vertical support post, 810A to 810C...Vertical blade (blade), 820A, 820B... Support member, 841...Electric motor

**Claims**

1.   A rotor sail system, comprising:

   a vertical support post extending in a vertical direction from a hull;

a blade connected to a shaft, the blade being rotatable about the shaft, the shaft extending in a predetermined direction with reference to the vertical support post;

a detection unit detecting a wind direction and a wind speed in a navigation area of the ship;

a receiving unit receiving a thrust command to specify a thrust of the ship; and

a rotation control unit capable of controlling a rotational speed of the blade about the shaft,

wherein the rotation control unit controls the rotational speed of the blade about the shaft based on the received thrust command and a detection result of the wind direction and the wind speed detected when the thrust command is received.

2. The rotor sail system of claim 1, further comprising a brake unit braking the rotation of the blade about the shaft when the wind speed exceeding a threshold is detected by the detection unit.

3. The rotor sail system of claim 1 or 2, further comprising a steering gear control unit controlling, when the rotational speed of the blade about the shaft is changed by the rotation control unit, a steering gear to steer to a direction opposite to an inertial force generated in a direction opposite to a direction of changing the rotational speed of the blade.

4. The rotor sail system of claim 2, wherein the rotation control unit includes an electric motor capable of rotationally driving the shaft.

5. The rotor sail system of claim 4, further comprising an energy storage unit storing regenerative energy generated by the electric motor when the rotation of the shaft decelerates.

6. The rotor sail system of claim 4, further comprising an obtaining unit obtaining the wind speed and the wind direction of wind currently occurring,

wherein, when the obtained rotational speed of the blade rotated only by the wind currently occurring is below a threshold, the rotation control unit increases the rotational speed of the blade about the shaft using the electric motor.

7. The rotor sail system of claim 6, wherein the threshold is calculated based on the thrust command.

8. The rotor sail system of claim 1 or 2, wherein the shaft is a vertical shaft extending along the vertical support post,

wherein the rotor sail system further includes a support member extending away from the vertical support post and being connected rotatably about the vertical shaft,

wherein the blade is a vertical blade that extends vertically, has a leading edge portion supported by the support member, and is rotatable about the vertical shaft, and

wherein the rotation control unit is capable of controlling the rotation speed of the vertical blade rotating about the vertical shaft.

9. The rotor sail system of claim 8, wherein the vertical blade is provided in two or more, and

wherein the two or more vertical blades are provided at equal intervals in a circumferential direction around the vertical shaft.

10. The rotor sail system of claim 8, further comprising an adjustment unit that allows adjustment of an angle of attack of the vertical blade,

wherein the adjustment unit adjusts the angle of attack so that a trailing edge portion of the vertical blade moves along an eccentric circular track centered on a position offset toward rear with reference to the vertical support post in a propulsion direction, which is a direction in which the hull is to be navigated.

11. The rotor sail system of claim 10, wherein the adjustment unit is connected to the vertical support post and has a guide rail along the eccentric circular track, and

wherein the vertical blade has a protrusion that fits into the guide rail at the trailing edge portions of the vertical blade.

12. The rotor sail system of claim 10, wherein the leading edge portion of the vertical blade is connected to the support member rotatably about a rotation shaft extending in the vertical direction,

wherein the adjustment unit includes:

an electric motor capable of adjusting the angle of attack by driving the rotation shaft; and

a drive control unit controlling the electric motor so that the trailing edge portion of the vertical blade moves on the eccentric circular track.

**13.** The rotor sail system of claim 11, wherein the vertical blade is provided with a projection that is insertable into and retractable from the guide rail,

wherein the adjustment unit moves, when the vertical blade is reverse-rotated about the vertical shaft under control of the rotation control unit, the protrusion into and out of the guide rail so that, the leading edge of the vertical blade faces opposite to its orientation during forward rotation of the vertical blade along the eccentric circular track.

**14.** The rotor sail system of claim 1 or 2, wherein the shaft is a vertical shaft extending in the vertical direction, and wherein the vertical support post is rotatable about the vertical shaft and its rotational direction is reversed depending on the wind direction.

**15.** The rotor sail system of claim 14, wherein the vertical support post includes a cylindrical portion having a cylindrical shape along the vertical direction, the cylindrical portion is rotatable about the vertical shaft and exposed to outside.

**16.** The rotor sail system of claim 14, wherein the blade is a vertical blade that extends in the vertical direction, has a leading edge portion supported, and is rotatable about the vertical shaft, and wherein the vertical blade has a symmetrical shape in a front-to-rear direction.

**17.** The rotor sail system of claim 15, further comprising a tubular fixed post fixed to the hull, the fixed post extending in the vertical direction and covering the cylindrical portion.

**18.** A ship integrated propulsion system, comprising:

a rotor sail including:

a vertical support post extending in a vertical direction from a hull;
a blade connected to a shaft, the blade being rotatable about the shaft, the shaft extending in a predetermined direction with reference to the vertical support post;
a detection unit detecting a wind direction and a wind speed in a navigation area of a ship;
a receiving unit receiving a thrust command to specify a thrust of the ship; and
a rotation control unit capable of controlling a rotational speed of the blade about the shaft, the rotation control unit controlling the rotational speed of the blade about the shaft based on the received thrust command and a detection result of the wind direction and the wind speed detected when the thrust command is received,

a remote control device including:

an operation unit being operated to control a propulsion speed of the ship; and
a determining unit determining a target thrust of the rotor sail and a target thrust of a propeller driven by a prime mover attached to the ship in accordance with an operation position of the operation unit,

a rotor sail control device controlling the rotational speed of the blade rotating about the shaft according to the target thrust of the rotor sail; and
a prime mover control device controlling a rotational speed of the prime mover according to the target thrust of the propeller.

**Fig. 1**

**Fig. 2**

# Fig. 3

# Fig. 4

**Fig. 5**

**Fig. 6**

Fig. 7

**Fig. 8**

**Fig. 9**

**Fig. 10**

Fig. 11

Fig. 12

Rotor Sail Ship (Rotor Sail Drive)
Propeller Drive
Rotor Sail Drive and Propeller Drive
Typical Hard Sail and Propeller Drive

Thrust

Power

Drive rotor sail

Shortfall in thrust is compansated by propeller

Thust compansated by rotor sail in drive mode

Thrust that rotor sail ship can generate without power

## Fig. 13

**Fig. 14**

**Fig. 15**

**Fig. 16**

**Fig. 17**

**Fig. 18**

**Fig. 19**

**Fig. 20**

**Fig. 21**

**Fig. 22**

**Fig. 23**

Fig. 24

**Fig. 25**

**Fig. 26**

**Fig. 27**

**Fig. 28**

**Fig. 29**

**Fig. 30**

**Fig. 31**

**Fig. 32**

**Fig. 33**

**Fig. 34**

**Fig. 35**

**Fig. 36**

**Fig. 37**

**Fig. 38**

**Fig. 39**

**Fig. 40**

**Fig. 41**

820A

810C

810B

810A

820B

804      841

# Fig. 42

**Fig. 43**

Fig. 44

EP 4 722 100 A1

## INTERNATIONAL SEARCH REPORT

| | International application No. |
|---|---|
| | **PCT/JP2024/014969** |

| A. | CLASSIFICATION OF SUBJECT MATTER |
|---|---|

*B63H 9/04*(2020.01)i; *B63H 9/02*(2006.01)i
FI:    B63H9/04; B63H9/02

According to International Patent Classification (IPC) or to both national classification and IPC

| B. | FIELDS SEARCHED |
|---|---|

Minimum documentation searched (classification system followed by classification symbols)

B63H9/04 ; B63H9/02 ; F03D9/32 ; F03D3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0093994 A (DAEWOO SHIPBUILDING & MARINE ENGINEERING CO., LTD.) 05 July 2022 (2022-07-05) | 1 |
| | paragraphs [0020]-[0034], fig. 1 | |
| Y | paragraphs [0020]-[0034], fig. 1 | 2-9, 14-16, 18 |
| A | | 10–13, 17 |
| Y | JP 2023-51721 A (DAIHARU CO., LTD.) 11 April 2023 (2023-04-11) paragraph [0031] | 2-9, 14-16 |
| Y | JP 2014-211141 A (KAKETA, Toshiyuki) 13 November 2014 (2014-11-13) paragraph [0002] | 2-9, 14-16 |
| Y | US 2016/0147228 A1 (NORSEPOWER OY) 26 May 2016 (2016-05-26) paragraphs [0053], [0107] | 5 |

✓ Further documents are listed in the continuation of Box C.    ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/014969** |

### C.    DOCUMENTS CONSIDERED TO BE RELEVANT

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 172969/1987 (Laid-open No. 171299/1988) (MITSUBISHI HEAVY INDUSTRIES, LTD.) 08 November 1988 (1988-11-08), description, p. 4, line 17 to p. 5, line 8, fig. 1, 2 | 8-9, 16 |
| Y | US 2006/0140765 A1 (SHIH, Chi-kuang) 29 June 2006 (2006-06-29) fig. 5, 6 | 8-9, 16 |
| Y | JP 6-199287 A (UENO, Yasuo) 19 July 1994 (1994-07-19) fig. 4 | 8-9, 16 |
| Y | JP 2013-537864 A (WOBBEN PROPERTIES GMBH) 07 October 2013 (2013-10-07) paragraphs [0025]-[0027], [0031]-[0033], [0040]-[0044], [0050]-[0054], fig. 1, 2, 5 | 18 |
| A | JP 2022-154395 A (PORT & AIRPORT RESEARCH INSTITUTE) 13 October 2022 (2022-10-13) entire text, all drawings | 1-18 |
| A | JP 2014-516874 A (MAGNUS LIMITED) 17 July 2014 (2014-07-17) entire text, all drawings | 1-18 |
| A | JP 57-126791 A (UENO, Yasuo) 06 August 1982 (1982-08-06) entire text, all drawings | 1-18 |
| A | JP 2011-226414 A (BELLSION K.K.) 10 November 2011 (2011-11-10) entire text, all drawings | 1-18 |

Form PCT/ISA/210 (second sheet) (July 2022)

**INTERNATIONAL SEARCH REPORT**
Information on patent family members

International application No.

**PCT/JP2024/014969**

| Patent document cited in search report | Publication date (day/month/year) | Patent family member(s) | Publication date (day/month/year) |
|---|---|---|---|
| KR  10-2022-0093994  A | 05 July 2022 | (Family: none) | |
| JP  2023-51721  A | 11 April 2023 | (Family: none) | |
| JP  2014-211141  A | 13 November 2014 | (Family: none) | |
| US  2016/0147228  A1 | 26 May 2016 | GB          2514855          A<br>KR  10-2016-0026893          A | |
| JP  63-171299  U1 | 08 November 1988 | (Family: none) | |
| US  2006/0140765  A1 | 29 June 2006 | (Family: none) | |
| JP  6-199287  A | 19 July 1994 | (Family: none) | |
| JP  2013-537864  A | 07 October 2013 | US          8875643          B2<br>column 4, line 30 to column 5, line 21, column 6, lines 15-65, column 7, line 58 to column 9, line 17, column 10, line 18 to column 11, line 6, fig. 1, 2, 5<br>CN          103153778          A<br>KR  10-2013-0052630          A | |
| JP  2022-154395  A | 13 October 2022 | (Family: none) | |
| JP  2014-516874  A | 17 July 2014 | US          2013/0042798          A1<br>KR  10-2014-0024469          A<br>CN          103906680          A | |
| JP  57-126791  A | 06 August 1982 | (Family: none) | |
| JP  2011-226414  A | 10 November 2011 | (Family: none) | |

Form PCT/ISA/210 (patent family annex) (July 2022)

**EP 4 722 100 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023085652 A
- JP 6199287 A